# EUROPEAN PATENT APPLICATION

(11) **EP 4 707 731 A1**
(43) Date of publication of application: **11.03.2026**
(21) Application number: 24800050.7
(22) Date of filing: 09.04.2024
(51) Int. Cl.: G01B 13/06, B21D 43/18, B65H 7/12, G01B 7/06

(54) **EXCESSIVE ATTRACTION DETECTION DEVICE**

(30) Priority: 02.05.2023 JP 2023075909
(71) Applicant: SMC Corporation, Tokyo 104-0031 (JP)
(72) Inventor: SAEGUSA Masahiro, Tsukubamirai-shi, Ibaraki 300-2493 (JP); WAKAMATSU Shuhei, Tsukubamirai-shi, Ibaraki 300-2493 (JP); SATO Motohiro, Tsukubamirai-shi, Ibaraki 300-2493 (JP)
(74) Representative: Keil & Schaafhausen Patentanwälte PartGmbB
(86) International application number: PCT/JP2024/014360
(87) International publication number: WO 2024/228319

(57) **Abstract**

An excessive attraction detection device (10) is composed of a cylinder unit (12) including pistons (36, 38), and a magnet unit (50) including a permanent magnet (58) for attraction. The permanent magnet for attraction can be displaced integrally with the pistons between an attraction position and a retreat position. The attraction position separation energizing force acting on the pistons is larger than the magnetic force of mutual attraction between the permanent magnet for attraction and the workpiece when one workpiece is attracted and held by a workpiece attraction device and smaller than the magnetic force of mutual attraction between the permanent magnet for attraction and the workpiece when two workpieces are attracted and held by the workpiece attraction device.

## Description

### TECHNICAL FIELD

The present invention relates to an excessive attraction detection device that is capable of detecting when a workpiece is excessively attracted and retained by a magnetic gripper.

### BACKGROUND ART

Conventionally, workpiece attraction devices have been known, such as vacuum pads, electromagnetic chucks, and magnetic grippers and the like, for attracting and retaining a workpiece such as an iron plate or the like that is made up from a magnetic material. In the case that workpieces such as steel plates or the like which are placed in a state of being stacked are attracted by a workpiece attraction device, when oil or moisture is adhered on the surface of the workpieces, the workpieces themselves adhere to each other and do not come off, and the plurality of workpieces may unintentionally be attracted on top of each other. In particular, in the case of an electromagnetic chuck or a magnetic gripper, since the magnetic force for the purpose of attracting the workpieces acts on the plurality of workpieces, it is even easier to attract the plurality of workpieces. When a workpiece forming process is carried out while the plurality of workpieces are attracted by the workpiece attraction device, not only may the workpieces become defective, but there is also a concern that the forming die may be damaged. Thus, there is also known a device for detecting a state in which a plurality of workpieces are attracted by the workpiece attraction device.

For example, in JP H08-219707 A, a two plate attraction detection device is disclosed, which includes a detector made up from an iron core, an excitation coil, and a detection coil, and which is disposed in the vicinity of an electromagnetic chuck. The excitation coil is excited by a square wave voltage that is generated by a square wave oscillator. An output of the detection coil is integrated by an integrator, an output of the integrator is compared with a previously stored attraction number table, and thereby it is determined whether the number of the workpieces that have been attracted is one or two.

### SUMMARY OF THE INVENTION

However, the detection coil of the aforementioned two plate attraction detection device is easily influenced by an external magnetic field, based on a magnetic flux that is generated from an AC solenoid, or alternatively, by a magnetic flux that is generated from an AC electromagnet that is used to attract the workpiece, and there is a concern that a malfunction may occur. Also, a case may occur in which a means for separating the two plate attraction detection devices from the workpiece is required.

The present invention has the object of solving the aforementioned problem.

The present invention is characterized by an excessive attraction detection device capable of detecting that an excessive amount of workpieces is attracted and retained by a workpiece attraction device, wherein the excessive attraction detection device includes a cylinder member including a piston, and a magnetic part including a permanent magnet used for attraction, the permanent magnet used for attraction is displaceable integrally with the piston between an attracted position and a retracted position, and a sensor is provided to detect a position of the permanent magnet used for attraction. An attracted position release biasing force, which acts on the piston in order to bias the permanent magnet used for attraction from the attracted position toward the retracted position, is set to a value that is larger than a mutually attractive magnetic force of one of the workpieces and the permanent magnet used for attraction at the attracted position in a case that the one of the workpieces is attracted and retained by the workpiece attraction device, and that is smaller than a mutually attractive magnetic force of the workpieces and the permanent magnet used for attraction at the attracted position in a case that two of the workpieces are attracted and retained by the workpiece attraction device.

In accordance with the excessive attraction detection device according to the present invention, since the permanent magnet used for attraction is displaced between the attracted position and the retracted position by the operation of the piston, the excessive attraction detection device does not receive an influence of an external magnetic field, and further, the excessive attraction detection device can be easily separated away from the workpiece.

### BRIEF DESCRIPTION OF DRAWINGS

[FIG. 1] FIG. 1 is an external view of an excessive attraction detection device according to a first embodiment of the present invention;
[FIG. 2] FIG. 2 is a cross-sectional view of the excessive attraction detection device of FIG. 1;
[FIG. 3] FIG. 3 is an external view of a specific example in which the excessive attraction detection device of FIG. 1 is mounted on a magnetic gripper;
[FIG. 4] FIG. 4 is a cross-sectional view of the excessive attraction detection device and the magnetic gripper of FIG. 3;
[FIG. 5] FIG. 5 is a view for describing a first operation of the excessive attraction detection device of FIG. 1;
[FIG. 6] FIG. 6 is a view for describing a second operation of the excessive attraction detection device of FIG. 1 in a case in which one workpiece is retained by the magnetic gripper;
[FIG. 7] FIG. 7 is a view for describing a second operation of the excessive attraction detection device of FIG. 1 in a case in which two workpieces are retained by the magnetic gripper;
[FIG. 8] FIG. 8 is a cross-sectional view of an excessive attraction detection device according to a second embodiment of the present invention;
[FIG. 9] FIG. 9 is a cross-sectional view of an excessive attraction detection device according to a third embodiment of the present invention;
[FIG. 10] FIG. 10 is an external view of a first mounting configuration that differs from that shown in FIG. 3;
[FIG. 11] FIG. 11 is a developmental view of the first mounting configuration of FIG. 10;
[FIG. 12] FIG. 12 is an external view of a second mounting configuration that differs from that shown in FIG. 3;
[FIG. 13] FIG. 13 is a developmental view of the second mounting configuration of FIG. 12;
[FIG. 14] FIG. 14 is an external view of a third mounting configuration that differs from that shown in FIG. 3;
[FIG. 15] FIG. 15 is a developmental view of the third mounting configuration of FIG. 14;
[FIG. 16] FIG. 16 is an external view of an excessive attraction detection device according to a fourth embodiment of the present invention;
[FIG. 17] FIG. 17 is a cross-sectional view of the excessive attraction detection device of FIG. 16;
[FIG. 18] FIG. 18 is a view for describing a first type of a fluid circuit connected to the excessive attraction detection device of FIG. 16;
[FIG. 19] FIG. 19 is a view for describing a second type of a fluid circuit connected to the excessive attraction detection device of FIG. 16;
[FIG. 20] FIG. 20 is an external view of an excessive attraction detection device according to a fifth embodiment of the present invention;
[FIG. 21] FIG. 21 is a cross-sectional view of the excessive attraction detection device of FIG. 20;
[FIG. 22] FIG. 22 is an external view of the excessive attraction detection device of FIG. 20 in a virtual state in which a housing is removed, so as to easily understand the relationship between the permanent magnet used for attraction and a fixed yoke in the excessive attraction detection device of FIG. 20; and
[FIG. 23] FIG. 23 is a view corresponding to FIG. 22 in which the permanent magnet used for attraction is in an attracted position.

### DESCRIPTION OF THE INVENTION

### (First Embodiment)

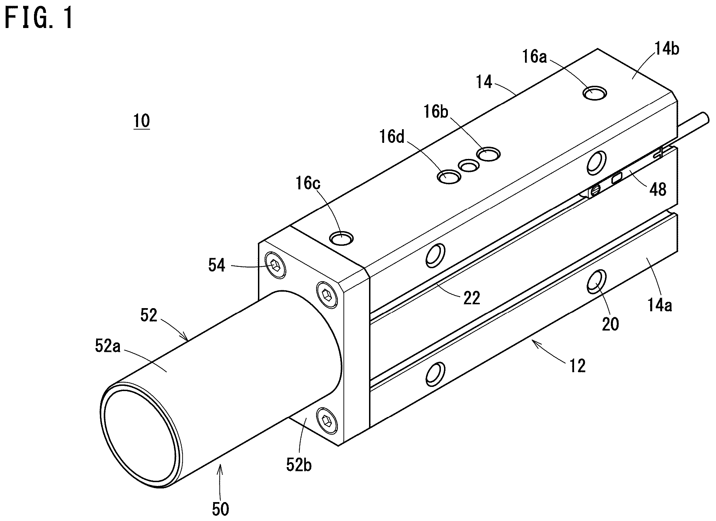

A description will be given with reference to FIG. 1 to FIG. 7 concerning an excessive attraction detection device 10 according to a first embodiment of the present invention. The excessive attraction detection device 10 is constituted from a cylinder member 12 that is operated by air, and a magnetic part 50 that is driven by the cylinder member 12.

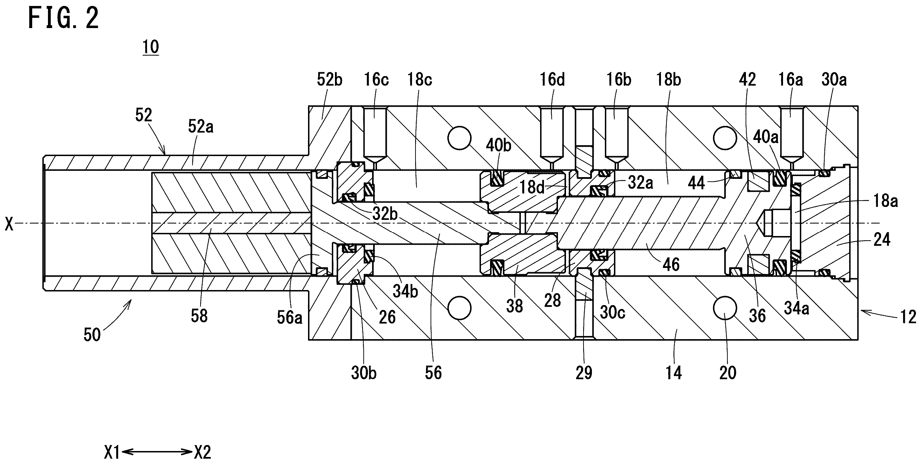

As shown in FIG. 2, the cylinder member 12 includes a cylinder tube 14, a first end cover 24, a second end cover 26, an intermediate plate 28, a first piston 36, and a second piston 38. One end in the axial direction of the cylinder tube 14, which has a rectangular cross section, is closed by the first end cover 24, and another end in the axial direction of the cylinder tube 14 is closed by the second end cover 26. The intermediate plate 28 is fixed by a fastener 29 to a center in the axial direction of the cylinder tube 14. A first cylinder chamber having a circular shaped cross section is formed between the first end cover 24 and the intermediate plate 28. A second cylinder chamber having a circular shaped cross section is formed between the second end cover 26 and the intermediate plate 28.

The first piston 36 is slidably disposed in the first cylinder chamber, and the second piston 38 is slidably disposed in the second cylinder chamber. The cross-sectional area of the second piston 38 is the same as the cross-sectional area of the first piston 36. A piston rod 46, which is formed integrally together with the first piston 36, is inserted through the intermediate plate 28, and extends into the second cylinder chamber. The second piston 38 is connected to an end of the piston rod 46 that extends into the second cylinder chamber. A first air chamber 18a is formed between the first piston 36 and the first end cover 24, and a second air chamber 18b is formed between the first piston 36 and the intermediate plate 28. A third air chamber 18c is formed between the second piston 38 and the second end cover 26, and a fourth air chamber 18d is formed between the second piston 38 and the intermediate plate 28.

As shown in FIG. 1, the cylinder tube 14 includes a pair of wide side surfaces 14a and a pair of narrow side surfaces 14b, and includes a first port 16a to a fourth port 16d that open on one of the narrow side surfaces 14b. The first port 16a is a port for the purpose of supplying and discharging air to and from the first air chamber 18a. A second port 16b is a port for the purpose of supplying and discharging air to and from the second air chamber 18b. A third port 16c is a port for the purpose of supplying and discharging air to and from the third air chamber 18c. Air at a pressure that differs from the pressure of the air that is supplied to the second port 16b is capable of being supplied to the third port 16c. The fourth air chamber 18d is always connected to the atmosphere through the fourth port 16d.

The cylinder tube 14 includes a plurality of bolt insertion holes 20. The bolt insertion holes 20 extend from one to the other of the pair of wide side surfaces 14a, and penetrate through the cylinder tube 14. The wide side surfaces 14a of the cylinder tube 14 include sensor mounting grooves 22. A sensor 48 that operates in response to a magnetic flux is disposed in the sensor mounting grooves 22. A permanent magnet used for detection 42 is mounted on an outer periphery of the first piston 36. The permanent magnet used for detection 42 causes the sensor 48 to be operated when the first piston 36 is at a predetermined position.

A first piston packing 40a is mounted on the outer periphery of the first piston 36. The first piston packing 40a is placed in sliding contact with an inner wall of the cylinder tube 14, and maintains an airtight seal between the first air chamber 18a and the second air chamber 18b. A second piston packing 40b is mounted on the outer periphery of the second piston 38. The second piston packing 40b is placed in sliding contact with the inner wall of the cylinder tube 14, and maintains an airtight seal between the third air chamber 18c and the fourth air chamber 18d. A first rod packing 32a is mounted on an inner periphery of the intermediate plate 28. The first rod packing 32a is placed in sliding contact with the piston rod 46, and maintains an airtight seal between the second air chamber 18b and the fourth air chamber 18d.

A first seal ring 30a is mounted on the first end cover 24. The first seal ring 30a abuts against the inner wall of the cylinder tube 14, and maintains the first air chamber 18a airtight from the exterior. A second seal ring 30b is mounted on the second end cover 26. The second seal ring 30b abuts against the inner wall of the cylinder tube 14, and maintains the third air chamber 18c airtight from the exterior. A third seal ring 30c is mounted on the intermediate plate 28. The third seal ring 30c abuts against the inner wall of the cylinder tube 14, and maintains an airtight seal between the second air chamber 18b and the fourth air chamber 18d.

A first damper 34a is mounted on the first end cover 24. The first damper 34a alleviates an impact when the first piston 36 abuts against the first end cover 24. A second damper 34b is mounted on the second end cover 26. The second damper 34b alleviates an impact when the second piston 38 abuts against the second end cover 26. Moreover, the member indicated by the reference numeral 44 is a wear ring that is mounted on the outer periphery of the first piston 36.

The magnetic part 50 is equipped with a housing 52, a drive rod 56, and a permanent magnet used for attraction 58. The housing 52 includes a housing main body portion 52a of a cylindrical shape that is open at both ends, and a plate portion 52b of a rectangular shape that extends outwardly from one end of the housing main body portion 52a. The housing 52 is mounted on an end part of the cylinder tube 14, by screwing mounting bolts 54 that are inserted through the plate portion 52b into the cylinder tube 14. The second end cover 26 is positioned and fixed between the cylinder tube 14 and the plate portion 52b of the housing 52.

The drive rod 56 is connected to the second piston 38. The drive rod 56 is inserted through the second end cover 26, and extends into the housing 52. An end part of the drive rod 56, which extends into the interior of the housing 52, has a circular shaped plate portion 56a. The permanent magnet used for attraction 58 is mounted on the plate portion 56a of the drive rod 56, and is accommodated in the interior of the housing 52. A second rod packing 32b is mounted on the inner periphery of the second end cover 26. The second rod packing 32b is placed in sliding contact with the drive rod 56, and maintains the third air chamber 18c airtight from the exterior.

The first piston 36, the piston rod 46, the second piston 38, and the drive rod 56 have a common axial line X. The permanent magnet used for attraction 58 is displaced, integrally together with the first piston 36, the piston rod 46, the second piston 38, and the drive rod 56, in the X1 direction or the X2 direction that are parallel to the axial line X. Hereinafter, these members, which are displaced integrally together as one unit, will be referred to as a "movable part".

When the air is supplied to the first air chamber 18a, and the air is discharged from the second air chamber 18b and the third air chamber 18c, the first piston 36 is biased toward the intermediate plate 28. In accordance with this feature, the movable part is displaced in the X1 direction. The displacement of the movable part in the X1 direction is restricted by the second piston 38 abutting against the second end cover 26. At this time, the permanent magnet used for attraction 58 does not project out from the housing 52. More specifically, even when the movable part is maximally displaced in the X1 direction and the permanent magnet used for attraction 58 is in the "attracted position", the permanent magnet used for attraction 58 does not project out from the housing 52.

When the air is supplied to the second air chamber 18b and the third air chamber 18c, and the air in the first air chamber 18a is discharged to the exterior, the first piston 36 is biased toward the first end cover 24, and the second piston 38 is biased toward the intermediate plate 28. In accordance with this feature, the movable part is displaced in the X2 direction. However, as will be described hereinafter, under certain conditions, even if the air is supplied to the second air chamber 18b and the third air chamber 18c, the movable part including the permanent magnet used for attraction 58 that is in the attracted position will not be displaced in the X2 direction. The displacement of the movable part in the X2 direction is restricted by the first piston 36 abutting against the first end cover 24. When the movable part is displaced maximally in the X2 direction, and the permanent magnet used for attraction 58 is in the "retracted position", the sensor 48 is operated. Moreover, the sensor 48 may have a function of being operated when the permanent magnet used for attraction 58 is in the "attracted position", or alternatively, a sensor that is operated when the permanent magnet used for attraction 58 is in the "attracted position" may be disposed separately from the sensor 48.

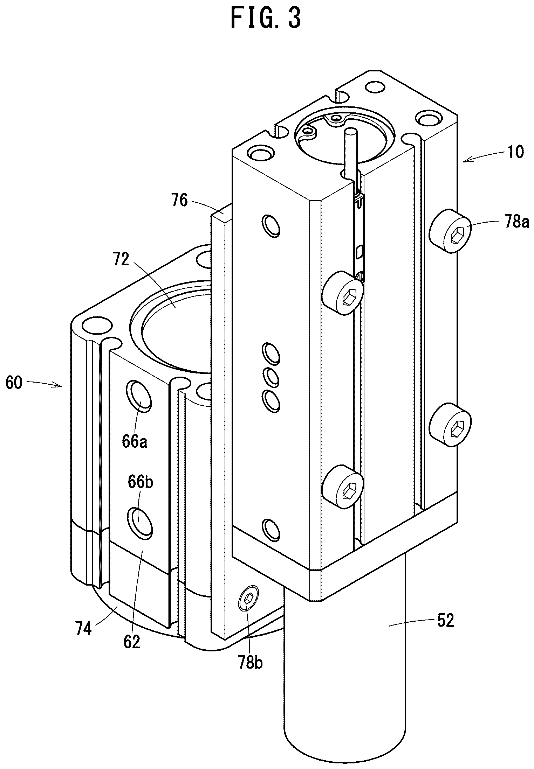

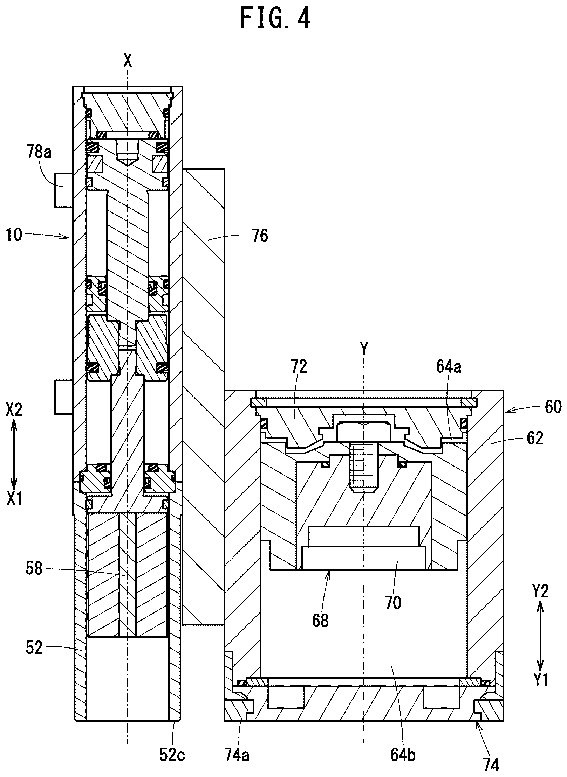

The excessive attraction detection device 10 is used to detect whether or not a plurality of workpieces are being attracted and retained by a workpiece attraction device such as a magnetic gripper, an electromagnetic chuck, a vacuum pad, or the like. With reference to FIG. 3 and FIG. 4, a description will be given concerning a specific example of a case in which the excessive attraction detection device 10 is mounted and used on a magnetic gripper 60. Incidentally, the excessive attraction detection device 10 need not necessarily be mounted on the workpiece attraction device itself, but may be mounted, for example, on a transport device that supports a plurality of the workpiece attraction devices.

The magnetic gripper 60, together with serving to attract and retain a workpiece such as an iron plate or the like by a magnetic force, also serves to release the workpiece that has been attracted and retained. The magnetic gripper 60 is equipped with a cylinder body 62, a piston assembly 68, a top cover 72, and a bottom cover 74. The bottom cover 74, which is mounted on an end part of the cylinder body 62, is capable of coming into contact with a workpiece, and a lower end 74a of the bottom cover 74 constitutes an attraction surface of the workpiece.

The piston assembly 68 including a permanent magnet used for retention 70, is disposed in the interior of the cylinder body 62. The piston assembly 68 is displaceable in a Y1 direction or a Y2 direction that is parallel to an axial line Y of the cylinder body 62. In the interior of the cylinder body 62, a first pressure chamber 64a is formed between the piston assembly 68 and the top cover 72, and a second pressure chamber 64b is formed between the piston assembly 68 and the bottom cover 74. The cylinder body 62 is equipped with a first pressure port 66a in order to supply and discharge air to and from the first pressure chamber 64a, and a second pressure port 66b in order to supply and discharge air to and from the second pressure chamber 64b.

When the air is supplied to the second pressure chamber 64b and the air is discharged from the first pressure chamber 64a, the piston assembly 68 is biased toward the top cover 72. When the piston assembly 68 which is biased is displaced in the Y2 direction until it abuts against the top cover 72, even if a workpiece that is in contact with the bottom cover 74 exists, the magnetic force of the permanent magnet used for retention 70 does not act on the workpiece.

When the air is supplied to the first pressure chamber 64a and the air is discharged from the second pressure chamber 64b, the piston assembly 68 is biased toward the bottom cover 74. When the piston assembly 68 which is biased is displaced in the Y1 direction and comes in close proximity to the bottom cover 74, if a workpiece exists within a predetermined distance from the bottom cover 74, the magnetic force of the permanent magnet used for retention 70 acts on the workpiece. When the piston assembly 68 is displaced until the end of displacement on the side of the bottom cover 74, the magnetic force of the permanent magnet used for retention 70 that acts on the workpiece becomes maximum. In accordance with this feature, the workpiece is attracted and retained by the magnetic gripper 60.

The excessive attraction detection device 10 is mounted via a mounting plate 76 on the magnetic gripper 60. Specifically, first mounting bolts 78a that are inserted into the bolt insertion holes 20 of the cylinder tube 14 are screwed into the mounting plate 76, thereby fixing the excessive attraction detection device 10 to the mounting plate 76. A second mounting bolt 78b that is inserted through the mounting plate 76 is screwed into the cylinder body 62 of the magnetic gripper 60, thereby fixing the mounting plate 76 to the magnetic gripper 60.

When the excessive attraction detection device 10 is mounted on the magnetic gripper 60, a lower end (end part) 52c of the housing 52 of the excessive attraction detection device 10 is aligned with the lower end 74a of the bottom cover 74 of the magnetic gripper 60 (refer to FIG. 4). The axial line X of the first piston 36, the piston rod 46, the second piston 38, and the drive rod 56 of the excessive attraction detection device 10 is parallel to the axial line Y of the cylinder body 62 of the magnetic gripper 60. Moreover, in the present specific example, it is premised that the surface of the workpiece that is attracted and retained by the magnetic gripper 60 is a uniform flat surface. Based on this premise, the excessive attraction detection device 10 is mounted on the magnetic gripper 60 in a manner so that the lower end 52c of the housing 52 is aligned with the lower end 74a of the bottom cover 74.

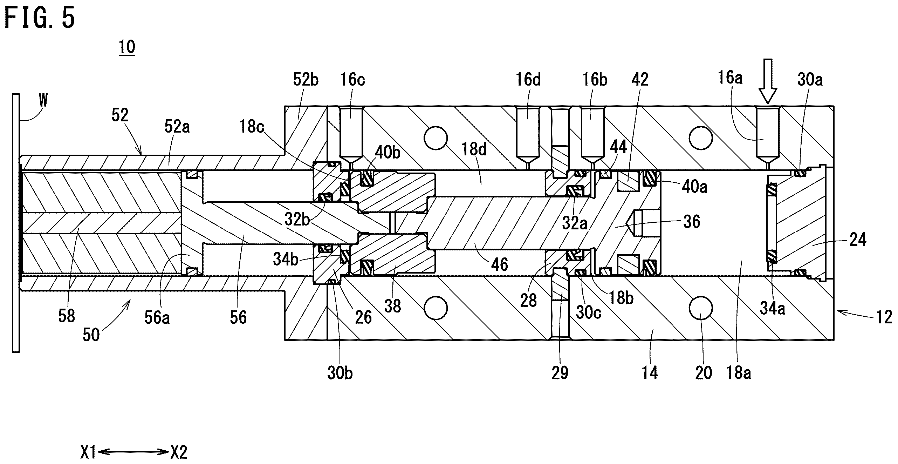

Next, with reference to FIG. 5 to FIG. 7, a description will be given concerning a method of determining whether or not two or more overlapping workpieces W are being attracted and retained by the magnetic gripper 60. The state in which the workpiece W is attracted and retained by the aforementioned magnetic gripper 60, and further, the permanent magnet used for attraction 58 of the excessive attraction detection device 10 that is mounted on the aforementioned magnetic gripper 60 is in the retracted position, is assumed to be an initial state.

In the initial state, the air is supplied to the first pressure chamber 64a of the magnetic gripper 60, and the piston assembly 68 is positioned at the end of displacement on the side of the bottom cover 74. The lower end 74a of the bottom cover 74 and the lower end 52c of the housing 52 abut against the workpiece W. The air in the first air chamber 18a of the excessive attraction detection device 10 is discharged, and the air of a predetermined pressure is accumulated in the second air chamber 18b and the third air chamber 18c.

From the aforementioned initial state, the air is supplied to the first air chamber 18a of the excessive attraction detection device 10, and the air is discharged from the second air chamber 18b and the third air chamber 18c. The movable part of the excessive attraction detection device 10 is displaced in the X1 direction, and the permanent magnet used for attraction 58 reaches the attracted position (refer to FIG. 5). In accordance with this feature, the majority of the magnetic flux leaving from the permanent magnet used for attraction 58 and returning to the permanent magnet used for attraction 58 passes through the workpiece W, and a mutually attractive magnetic force acts between the permanent magnet used for attraction 58 and the workpiece W. The magnitude of this magnetic force differs depending on the number of the workpieces W that are attracted and retained by the magnetic gripper 60. In the case that the number of the workpieces W that are attracted and retained by the magnetic gripper 60 is two, in comparison with a case in which the number of the workpieces W that are attracted and retained by the magnetic gripper 60 is one, the magnetic force that attracts the permanent magnet used for attraction 58 and the workpiece W is greater. Moreover, in FIG. 5, a state is shown in which one workpiece W is retained by the magnetic gripper 60.

Next, the air at a pressure of P2 is supplied to the second air chamber 18b of the excessive attraction detection device 10, the air at a pressure of P3 is supplied to the third air chamber 18c, and the air is discharged from the first air chamber 18a. Due to the air that is supplied to the second air chamber 18b, a thrust force (a biasing force) F1 in the X2 direction acts on the first piston 36. If the cross-sectional area of the first piston 36 is S and the cross-sectional area of the piston rod 46 is S1, then F1 = P2 × (S - S1). Due to the air that is supplied to the third air chamber 18c, a thrust force (a biasing force) F2 in the X2 direction acts on the second piston 38. If the cross-sectional area of the drive rod 56 is S2, then from the fact that the cross-sectional area of the second piston 38 is the same as the cross-sectional area of the first piston 36, F2 = P3 × (S - S2). The force in the X2 direction that acts on the movable part is (F1 + F2).

On the other hand, the force that acts in the X1 direction on the movable part is a force that attracts the permanent magnet used for attraction 58 to the workpiece W. As noted previously, the force with which the permanent magnet used for attraction 58 is attracted to the workpiece W varies depending on the number of the workpieces W. In the case that the number of the workpieces W that are attracted and retained by the magnetic gripper 60 is one, the force with which the permanent magnet used for attraction 58 is attracted to the workpiece W is defined as MF1. In the case that the number of the workpieces W that are attracted and retained by the magnetic gripper 60 is two, the force with which the permanent magnet used for attraction 58 is attracted to the workpiece W is defined as MF2 (MF1 < MF2). The pressure P2 of the air that is supplied to the second air chamber 18b and the pressure P3 of the air that is supplied to the third air chamber 18c are set in a manner so that the inequality MF1 < (F1 + F2) < MF2 is satisfied. The term (F1 + F2) corresponds to an "attracted position release biasing force" of the present invention.

The force with which the permanent magnet used for attraction 58 is attracted to the workpiece W also differs depending on the type of the workpiece W. For example, if while keeping the air pressure P2 that is supplied to the second air chamber 18b constant, the air pressure P3 that is supplied to the third air chamber 18c is finely adjusted, the aforementioned inequality can be easily established depending on the type of the workpiece W.

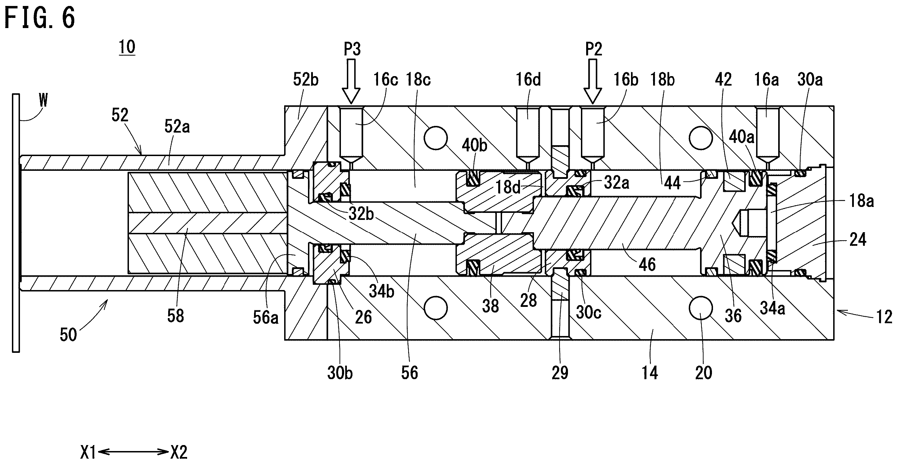

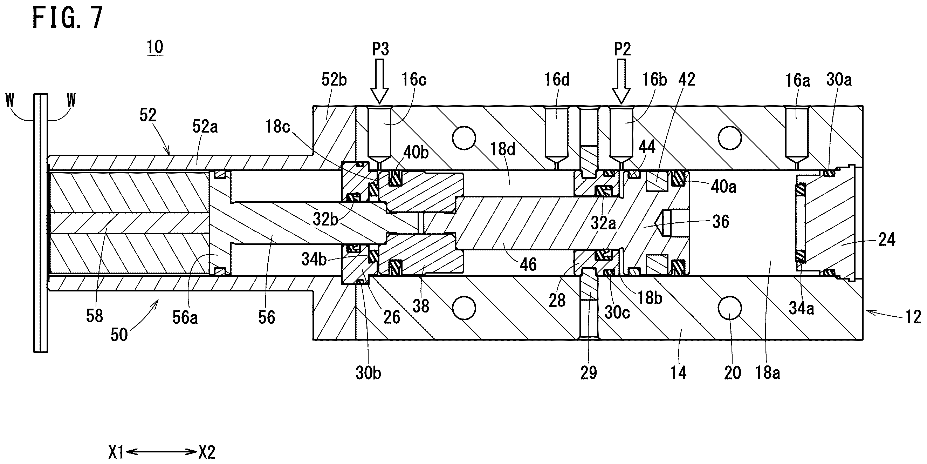

In the case that the number of the workpieces W that are attracted and retained by the magnetic gripper 60 is one, when the air is supplied to the second air chamber 18b and the third air chamber 18c, the movable part including the permanent magnet used for attraction 58, which was in the attracted position, is displaced in the X2 direction, and the permanent magnet used for attraction 58 reaches the retracted position (refer to FIG. 6). By the movable part reaching the retracted position, the sensor 48 is operated. On the other hand, in the case that the number of the workpieces W that are attracted and retained by the magnetic gripper 60 is two, even if the air is supplied to the second air chamber 18b and the third air chamber 18c, the permanent magnet used for attraction 58 remains at the attracted position, and the sensor 48 is not operated (refer to FIG. 7).

Also in the case that the number of the workpieces W that are attracted and retained by the magnetic gripper 60 is three or more, similar to the case of two workpieces, the sensor 48 is not operated. Accordingly, after the air has been supplied to the second air chamber 18b and the third air chamber 18c, monitoring is carried out as to whether or not the sensor 48 is operated, and in the case that the sensor 48 is not operated, it can be determined that the number of the workpieces W that have been attracted and retained by the magnetic gripper 60 is two or more.

In accordance with the excessive attraction detection device 10 according to the present embodiment, since the permanent magnet used for attraction 58 is displaced between the attracted position and the retracted position by the operation of the first piston 36 and the second piston 38, the excessive attraction detection device 10 does not receive an influence of an external magnetic field, and further, the excessive attraction detection device 10 can be easily separated away from the workpiece W.

Further, from the fact that the attracted position release biasing force is the sum of the thrust force that acts on the first piston 36 and the thrust force that acts on the second piston 38, even if the outer diameter of the cylinder tube 14 is small, a large attracted position release biasing force can be obtained. Further, by appropriately setting the air pressure P2 that acts on the first piston 36 and the air pressure P3 that acts on the second piston 38, concerning various workpieces, it is possible to easily detect if the workpiece is being excessively attracted and retained.

According to the present embodiment, by the permanent magnet used for detection 42 being mounted on the first piston 36, and the sensor 48 that operates in response to the magnetic flux of the permanent magnet used for detection 42 being mounted on the cylinder tube 14, it is detected that the permanent magnet used for attraction 58 is in the retracted position. However, the means for detecting the position of the permanent magnet used for attraction 58 is not necessarily limited to this feature.

### (Second Embodiment)

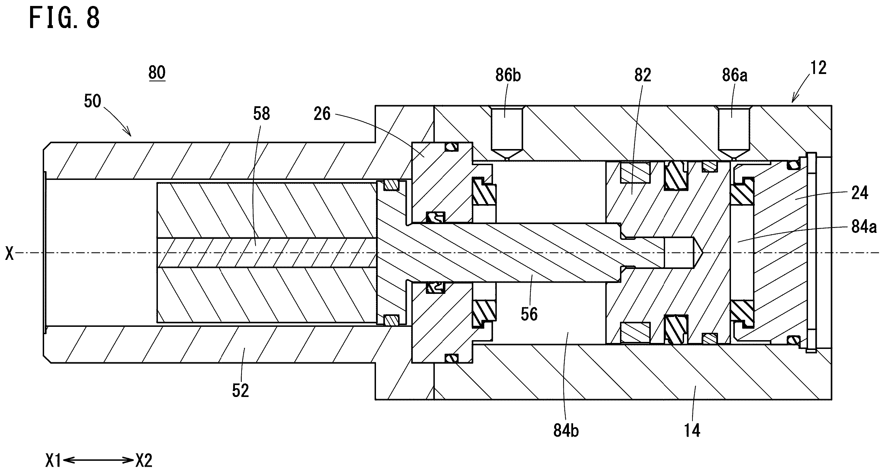

Next, a description will be given with reference to FIG. 8 concerning an excessive attraction detection device 80 according to a second embodiment of the present invention. Moreover, in the excessive attraction detection device 80 according to the second embodiment, constituent elements that are the same as or equivalent to those in the excessive attraction detection device 10 described above are designated by the same reference numerals.

The excessive attraction detection device 80 is constituted from a cylinder member 12 that is operated by air, and the magnetic part 50 that is driven by the cylinder member 12. The cylinder member 12 is equipped with the cylinder tube 14, the first end cover 24, the second end cover 26, and a single piston 82. A first air chamber 84a is formed between the piston 82 and the first end cover 24, and a second air chamber 84b is formed between the piston 82 and the second end cover 26. The cylinder tube 14 is equipped with a first port 86a that supplies and discharges air to and from the first air chamber 84a, and a second port 86b that supplies and discharges air to and from the second air chamber 84b.

The magnetic part 50 is equipped with the housing 52, the drive rod 56, and the permanent magnet used for attraction 58. The drive rod 56 is connected to the piston 82. The drive rod 56 is inserted through the second end cover 26, and extends into the housing 52. The permanent magnet used for attraction 58 is mounted on an end part of the drive rod 56. The piston 82 and the drive rod 56 have a common axial line X. The permanent magnet used for attraction 58 is displaced, integrally together with the piston 82 and the drive rod 56, in the X1 direction or the X2 direction that are parallel to the axial line X. Hereinafter, the permanent magnet used for attraction 58, the piston 82, and the drive rod 56 will be collectively referred to as a "movable part".

When the air is supplied to the first air chamber 84a, and the air is discharged from the second air chamber 84b, the piston 82 is biased toward the second end cover 26, and the movable part is displaced in the X1 direction. The displacement of the movable part in the X1 direction is restricted by the piston 82 abutting against the second end cover 26. Even when the movable part is maximally displaced in the X1 direction and the permanent magnet used for attraction 58 is in the "attracted position", the permanent magnet used for attraction 58 does not project out from the housing 52.

When the air is supplied to the second air chamber 84b, and the air is discharged from the first air chamber 84a, the piston 82 is biased toward the first end cover 24, and the movable part is displaced in the X2 direction. The displacement of the movable part in the X2 direction is restricted by the piston 82 abutting against the first end cover 24. When the movable part is displaced maximally in the X2 direction, and the permanent magnet used for attraction 58 is in the "retracted position", the sensor 48 that is mounted on the cylinder tube 14 is operated.

Next, a description will be given concerning a method of determining whether or not two or more overlapping workpieces W are being attracted and retained by the magnetic gripper 60. The state in which the workpiece W is attracted and retained by the aforementioned magnetic gripper 60, and further, the permanent magnet used for attraction 58 of the excessive attraction detection device 80 that is mounted on the magnetic gripper 60 is in the retracted position, is assumed to be an initial state. In the initial state, the air in the first air chamber 84a of the excessive attraction detection device 80 is discharged, and the air of a predetermined pressure is accumulated in the second air chamber 84b.

From the aforementioned initial state, the air is supplied to the first air chamber 84a of the excessive attraction detection device 80, and the air is discharged from the second air chamber 84b. The movable part of the excessive attraction detection device 80 is displaced in the X1 direction, and the permanent magnet used for attraction 58 reaches the attracted position. In accordance with this feature, a mutually attractive magnetic force acts between the permanent magnet used for attraction 58 and the workpiece W. The magnitude of this magnetic force differs depending on the number of the workpieces W that are attracted and retained by the magnetic gripper 60.

Next, the air at a pressure P2' is supplied to the second air chamber 84b of the excessive attraction detection device 80, and the air in the first air chamber 84a is discharged. Due to the air that is supplied to the second air chamber 84b, a thrust force (a biasing force) F in the X2 direction acts on the piston 82. If the cross-sectional area of the piston 82 is S' and the cross-sectional area of the drive rod 56 is S2, then F = P2' × (S' - S2).

On the other hand, the force that acts in the X1 direction on the movable part is a force that attracts the permanent magnet used for attraction 58 to the workpiece W. In the case that the number of the workpieces W that are attracted and retained by the magnetic gripper 60 is one, the force with which the permanent magnet used for attraction 58 is attracted to the workpiece W is defined as MF1. In the case that the number of the workpieces W that are attracted and retained by the magnetic gripper 60 is two, the force with which the permanent magnet used for attraction 58 is attracted to the workpiece W is defined as MF2. The pressure P2' of the air that is supplied to the second air chamber 84b is set in a manner so that the inequality MF1 < F < MF2 is satisfied. The term F corresponds to the "attracted position release biasing force" of the present invention.

In the case that the number of the workpieces W that are attracted and retained by the magnetic gripper 60 is one, when the air is supplied to the second air chamber 84b, the movable part including the permanent magnet used for attraction 58, which was in the attracted position, is displaced in the X2 direction, and the permanent magnet used for attraction 58 reaches the retracted position. By the movable part reaching the retracted position, the sensor 48 is operated.

On the other hand, in the case that the number of the workpieces W that are attracted and retained by the magnetic gripper 60 is two, even if the air is supplied to the second air chamber 84b, the permanent magnet used for attraction 58 remains at the attracted position, and the sensor 48 is not operated. After the air has been supplied to the second air chamber 84b, monitoring is carried out as to whether or not the sensor 48 is operated, and in the case that the sensor 48 is not operated, it can be determined that the number of the workpieces W that have been attracted and retained by the magnetic gripper 60 is two or more.

In accordance with the excessive attraction detection device 80 according to the present embodiment, since the permanent magnet used for attraction 58 is displaced between the attracted position and the retracted position by the operation of the piston 82, the excessive attraction detection device 80 does not receive an influence of an external magnetic field, and further, the excessive attraction detection device can be easily separated away from the workpiece W. Further, since the cylinder member 12 includes a single piston 82, the structure of the cylinder member 12 is simplified.

### (Third Embodiment)

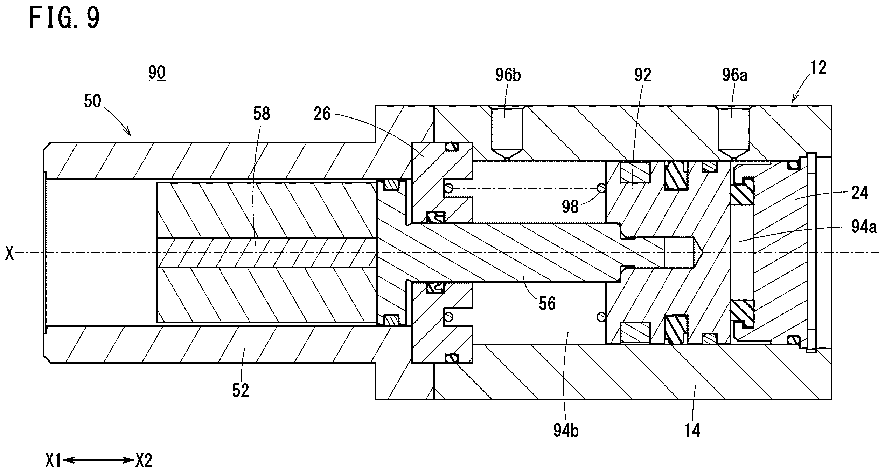

Next, a description will be given with reference to FIG. 9 concerning an excessive attraction detection device 90 according to a third embodiment of the present invention. Moreover, in the excessive attraction detection device 90 according to the third embodiment, constituent elements that are the same as or equivalent to those in the excessive attraction detection device 10 are designated by the same reference numerals.

The excessive attraction detection device 90 is constituted from a cylinder member 12 that is operated by air, and the magnetic part 50 that is driven by the cylinder member 12. The cylinder member 12 is equipped with the cylinder tube 14, the first end cover 24, the second end cover 26, and a piston 92. A first air chamber 94a is formed between the piston 92 and the first end cover 24, and a second air chamber 94b is formed between the piston 92 and the second end cover 26.

The cylinder tube 14 includes a first port 96a and a second port 96b. The first port 96a is a port for the purpose of supplying and discharging air to and from the first air chamber 94a. The second air chamber 94b is always connected to the atmosphere through the second port 96b. Inside the second air chamber 94b, a return spring 98 is disposed between the piston 92 and the second end cover 26.

The magnetic part 50 is equipped with the housing 52, the drive rod 56, and the permanent magnet used for attraction 58. The drive rod 56 is connected to the piston 92. The drive rod 56 is inserted through the second end cover 26, and extends into the housing 52. The permanent magnet used for attraction 58 is mounted on an end part of the drive rod 56. The piston 92 and the drive rod 56 have a common axial line X. The permanent magnet used for attraction 58 is displaced, integrally together with the piston 92 and the drive rod 56, in the X1 direction or the X2 direction that are parallel to the axial line X. Hereinafter, the permanent magnet used for attraction 58, the piston 92, and the drive rod 56 will be collectively referred to as a "movable part".

When the air is supplied to the first air chamber 94a, the piston 92 is biased toward the second end cover 26. The movable part is displaced in the X1 direction against the biasing force of the return spring 98. The displacement of the movable part in the X1 direction is restricted by the piston 92 abutting against the second end cover 26. Even when the movable part is maximally displaced in the X1 direction and the permanent magnet used for attraction 58 is in the "attracted position", the permanent magnet used for attraction 58 does not project out from the housing 52.

When the air in the first air chamber 94a is discharged to the exterior, the movable part is displaced in the X2 direction by the biasing force of the return spring 98. The displacement of the movable part in the X2 direction is restricted by the piston 92 abutting against the first end cover 24. When the movable part is displaced maximally in the X2 direction, and the permanent magnet used for attraction 58 is in the "retracted position", the sensor 48 that is mounted on the cylinder tube 14 is operated.

Next, a description will be given concerning a method of determining whether or not two or more overlapping workpieces W are being attracted and retained by the magnetic gripper 60. The state in which the workpiece W is attracted and retained by the aforementioned magnetic gripper 60, and further, the permanent magnet used for attraction 58 of the excessive attraction detection device 90 that is mounted on the magnetic gripper 60 is in the retracted position, is assumed to be an initial state.

From the aforementioned initial state, the air is supplied to the first air chamber 94a of the excessive attraction detection device 90. The movable part of the excessive attraction detection device 90 is displaced in the X1 direction, and the permanent magnet used for attraction 58 reaches the attracted position. In accordance with this feature, a mutually attractive magnetic force acts between the permanent magnet used for attraction 58 and the workpiece W. The magnitude of this magnetic force differs depending on the number of the workpieces W that are attracted and retained by the magnetic gripper 60.

Next, the air is discharged from the first air chamber 94a of the excessive attraction detection device 90. The force in the X2 direction that acts on the movable part is a biasing force of the return spring 98. The force that acts in the X1 direction on the movable part is a force that attracts the permanent magnet used for attraction 58 to the workpiece W. The biasing force of the return spring 98 when the permanent magnet used for attraction 58 is in the attracted position is defined as CF. In the case that the number of the workpieces W that are attracted and retained by the magnetic gripper 60 is one, the force with which the permanent magnet used for attraction 58 is attracted to the workpiece W is defined as MF1. In the case that the number of the workpieces W that are attracted and retained by the magnetic gripper 60 is two, the force with which the permanent magnet used for attraction 58 is attracted to the workpiece W is defined as MF2. The spring force of the return spring 98 is set in a manner so that the inequality MF1 < CF < MF2 is satisfied. The term CF corresponds to the "attracted position release biasing force" of the present invention.

In the case that the number of the workpieces W that are attracted and retained by the magnetic gripper 60 is one, when the air is discharged from the first air chamber 94a, the movable part including the permanent magnet used for attraction 58, which was in the attracted position, is displaced in the X2 direction, and the permanent magnet used for attraction 58 reaches the retracted position. By the movable part reaching the retracted position, the sensor 48 is operated.

On the other hand, in the case that the number of the workpieces W that are attracted and retained by the magnetic gripper 60 is two, even if the air is discharged from the first air chamber 94a, the permanent magnet used for attraction 58 remains at the attracted position, and the sensor 48 is not operated. After the air has been discharged from the first air chamber 94a, monitoring is carried out as to whether or not the sensor 48 is operated, and in the case that the sensor 48 is not operated, it can be determined that the number of the workpieces W that have been attracted and retained by the magnetic gripper 60 is two or more.

Moreover, although the force of the return spring 98 that acts on the movable part decreases as the movable part is displaced in the X2 direction, the mutually attractive force between the permanent magnet used for attraction 58 and the workpiece W also decreases as the movable part is displaced in the X2 direction. Since the degree of decrease in the latter is greater than the degree of decrease in the former, in the case that the number of the workpieces W that are attracted and retained by the magnetic gripper 60 is one, if the inequality MF1 < CF < MF2 is satisfied, the movable part will be displaced smoothly without any hinderance in the X2 direction.

In accordance with the excessive attraction detection device 90 according to the present embodiment, since the permanent magnet used for attraction 58 is displaced between the attracted position and the retracted position by the operation of the piston 92, the excessive attraction detection device 90 does not receive an influence of an external magnetic field, and further, the excessive attraction detection device can be easily separated away from the workpiece W. Further, since the attracted position release biasing force is obtained by the return spring 98, the air circuit in the cylinder member 12 is simplified.

A description has already been stated concerning the specific example in which the excessive attraction detection device 10 is mounted on the magnetic gripper 60. However, in the case that the workpiece is not uniformly flat, unlike the previously described embodiment, it is necessary for the lower end 52c of the housing 52 of the excessive attraction detection device 10 to be displaced from the position that is aligned with the lower end 74a of the bottom cover 74 of the magnetic gripper 60. Thus, three examples will be cited of how the positional relationship between the lower end 52c of the housing 52 and the lower end 74a of the bottom cover 74 can be adjusted. Moreover, in the following description, when terms relating to the upper and lower directions are used, for the sake of convenience, such terms refer to directions on the drawings, and the actual arrangement of each of the components is not necessarily limited. Moreover, the mounting configurations described below can also be applied to cases in which the excessive attraction detection device 10 is mounted on a workpiece attraction device other than a magnetic gripper.

### (First Mounting Configuration)

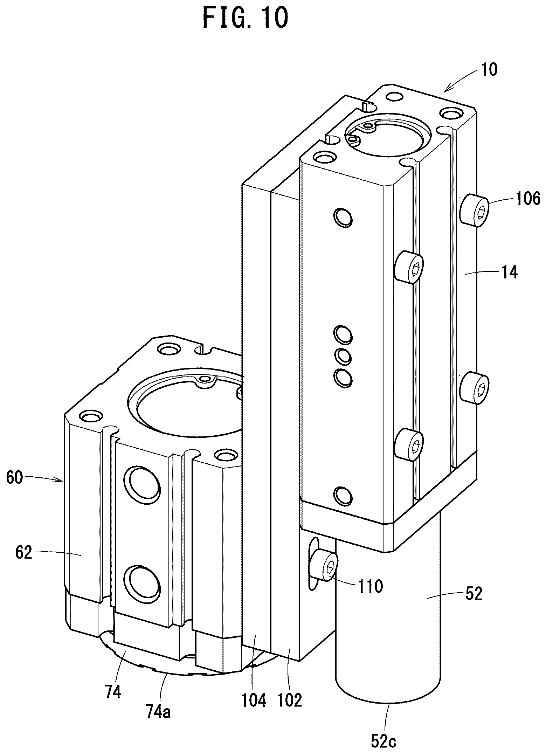

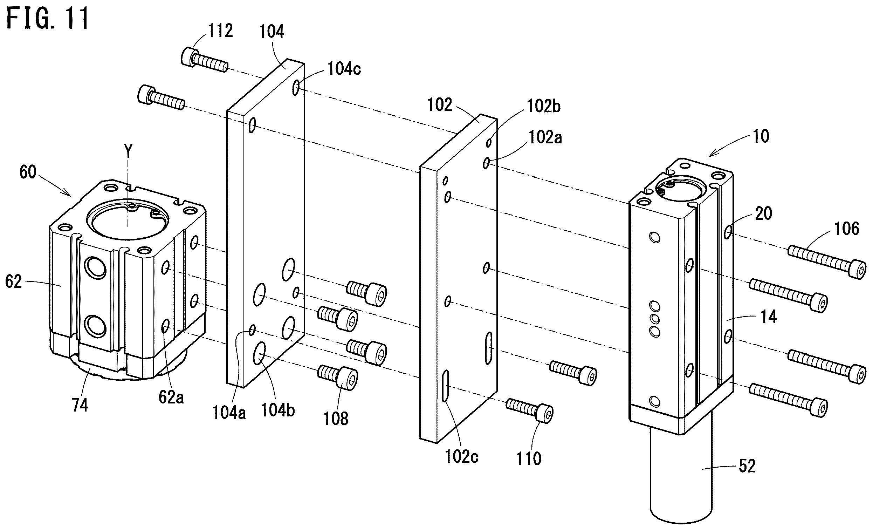

A description will be given with reference to FIG. 10 and FIG. 11 concerning a first mounting configuration by which the excessive attraction detection device 10 is mounted on the magnetic gripper 60. The excessive attraction detection device 10 is mounted on the magnetic gripper 60 via a rectangular shaped first plate 102 and a rectangular shaped second plate 104.

The first plate 102 has first mounting holes 102a, second mounting holes 102b, and elongated holes 102c. The first mounting holes 102a and the second mounting holes 102b penetrate in the thickness direction through the first plate 102, and are equipped with female threads. The elongated holes 102c are elongated in the upward/downward direction, and penetrate in the thickness direction through the first plate 102. The second plate 104 includes mounting holes 104a, round holes 104b, and elongated holes 104c. The mounting holes 104a penetrate in the thickness direction through the second plate 104, and are each equipped with a female thread. The round holes 104b penetrate in the thickness direction through the second plate 104, and each include a stepped portion on which a head of a second bolt 108 is seated. The elongated holes 104c are elongated in the upward/downward direction, and penetrate in the thickness direction through the second plate 104.

First bolts 106 are inserted through the bolt insertion holes 20 of the cylinder tube 14, and are screwed into the first mounting holes 102a of the first plate 102. In accordance therewith, the first plate 102 is fixed to the excessive attraction detection device 10. The second bolts 108 are inserted through the round holes 104b of the second plate 104, and are screwed into mounting holes 62a of the cylinder body 62. In accordance therewith, the second plate 104 is fixed to the magnetic gripper 60.

Third bolts 110 are inserted through the elongated holes 102c of the first plate 102, and are screwed into the mounting holes 104a of the second plate 104. Further, fourth bolts 112 are inserted through the elongated holes 104c of the second plate 104, and are screwed into the second mounting holes 102b of the first plate 102. In accordance with this feature, the first plate 102 is mounted in a manner so that the position thereof can be adjusted upwardly and downwardly with respect to the second plate 104, within a range permitted by the elongated holes 102c of the first plate 102 and the elongated holes 104c of the second plate 104.

In accordance with the above-described configuration, the excessive attraction detection device 10 is mounted with respect to the magnetic gripper 60, in a manner so that the position thereof can be adjusted in a direction parallel to the axial line Y of the cylinder body 62. More specifically, the lower end 52c of the housing 52 is capable of changing the position thereof within a predetermined range upwardly and downwardly from a central position where it is aligned with the lower end 74a of the bottom cover 74.

### (Second Mounting Configuration)

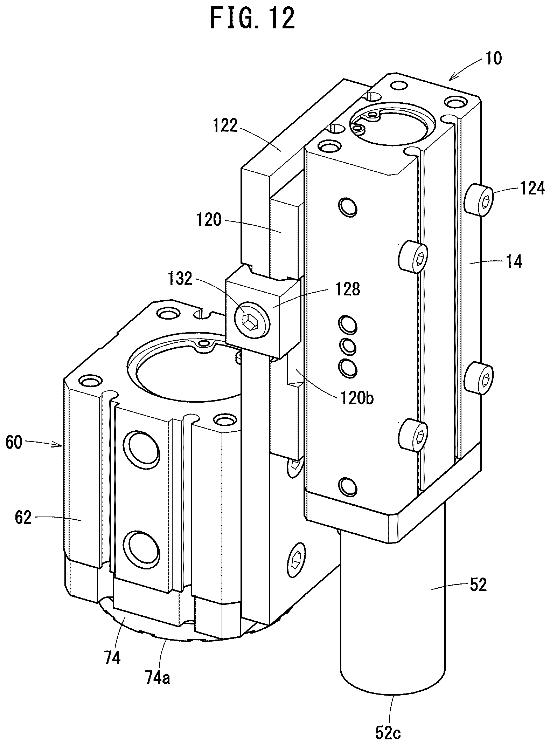

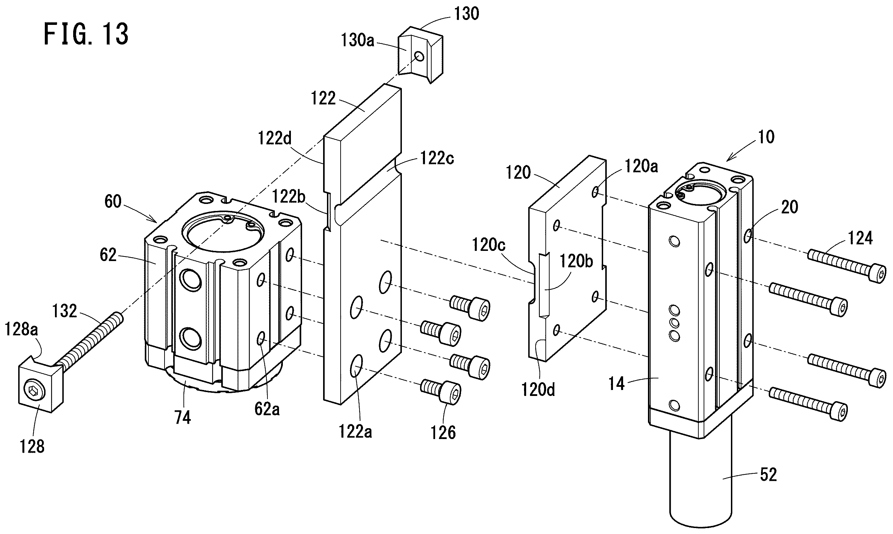

A description will be given with reference to FIG. 12 and FIG. 13 concerning a second mounting configuration by which the excessive attraction detection device 10 is mounted on the magnetic gripper 60. The excessive attraction detection device 10 is mounted on the magnetic gripper 60 via a rectangular shaped first plate 120 and a rectangular shaped second plate 122.

The first plate 120 includes mounting holes 120a, first groove portions 120b, and a second groove portion 120c. The mounting holes 120a penetrate in the thickness direction through the first plate 120, and each include a female thread. The first groove portions 120b are formed over a predetermined length, on a pair of ridges 120d of the first plate 120 that extend upwardly and downwardly in close proximity to the cylinder tube 14. The second groove portion 120c extends on a surface in which the first plate 120 contacts the second plate 122 in a direction perpendicular to the first groove portions 120b, and traverses the first plate 120.

The second plate 122 includes round holes 122a, first groove portions 122b, and a second groove portion 122c. The round holes 122a penetrate in the thickness direction through the second plate 122, and each include a stepped portion on which a head of a second bolt 126 is seated. The first groove portions 122b are formed over a predetermined length, on a pair of ridges 122d of the second plate 122 that extend upwardly and downwardly in close proximity to the cylinder body 62. The second groove portion 122c extends on a surface in which the second plate 122 contacts the first plate 120 in a direction perpendicular to the first groove portions 122b, and traverses the second plate 122. The width of the second groove portion 122c of the second plate 122 is smaller than the width of the second groove portion 120c of the first plate 120.

First bolts 124 are inserted through the bolt insertion holes 20 of the cylinder tube 14, and are screwed into the mounting holes 120a of the first plate 120. In accordance therewith, the first plate 120 is fixed to the excessive attraction detection device 10. The second bolts 126 are inserted through the round holes 122a of the second plate 122, and are screwed into the mounting holes 62a of the cylinder body 62. In accordance therewith, the second plate 122 is fixed to the magnetic gripper 60.

The second plate 122 is connected to the first plate 120 using a first fastener 128, a second fastener 130, and a connecting bolt 132. The first fastener 128 is equipped with a pair of fastening pieces 128a that extend upwardly and downwardly. The second fastener 130 is equipped with a pair of fastening pieces 130a that extend upwardly and downwardly. The first groove portions 120b of the first plate 120 are longer than the fastening pieces 128a of the first fastener 128 and the fastening pieces 130a of the second fastener 130. The length of the first groove portions 122b of the second plate 122 is roughly the same as the length of the fastening pieces 128a of the first fastener 128 and the length of the fastening pieces 130a of the second fastener 130.

The fastening pieces 128a of the first fastener 128 are fastened onto one of the pair of first groove portions 120b of the first plate 120, and into one of the pair of first groove portions 122b of the second plate 122. The fastening pieces 130a of the second fastener 130 are fastened onto the other of the pair of first groove portions 120b of the first plate 120, and into the other of the pair of first groove portions 122b of the second plate 122. The connecting bolt 132 which is inserted through the first fastener 128 passes through a gap that is formed by the second groove portion 120c of the first plate 120 and the second groove portion 122c of the second plate 122, and is screwed into the second fastener 130. In accordance with this feature, the first plate 120 is mounted in a manner so that the position thereof can be adjusted upwardly and downwardly with respect to the second plate 122, within a range permitted by the first groove portions 120b of the first plate 120.

In accordance with the above-described configuration, the excessive attraction detection device 10 is mounted with respect to the magnetic gripper 60, in a manner so that the position thereof can be adjusted in a direction parallel to the axial line Y of the cylinder body 62. More specifically, the lower end 52c of the housing 52 is capable of changing the position thereof within a predetermined range upwardly and downwardly from a central position where it is aligned with the lower end 74a of the bottom cover 74.

### (Third Mounting Configuration)

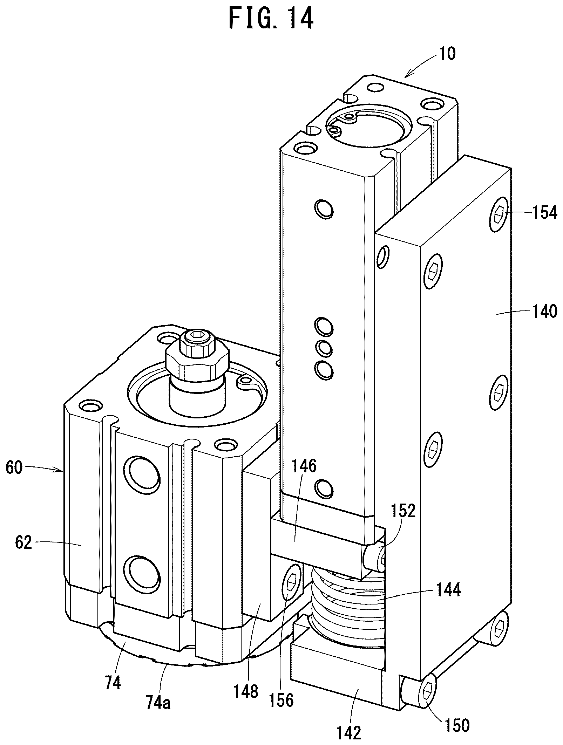

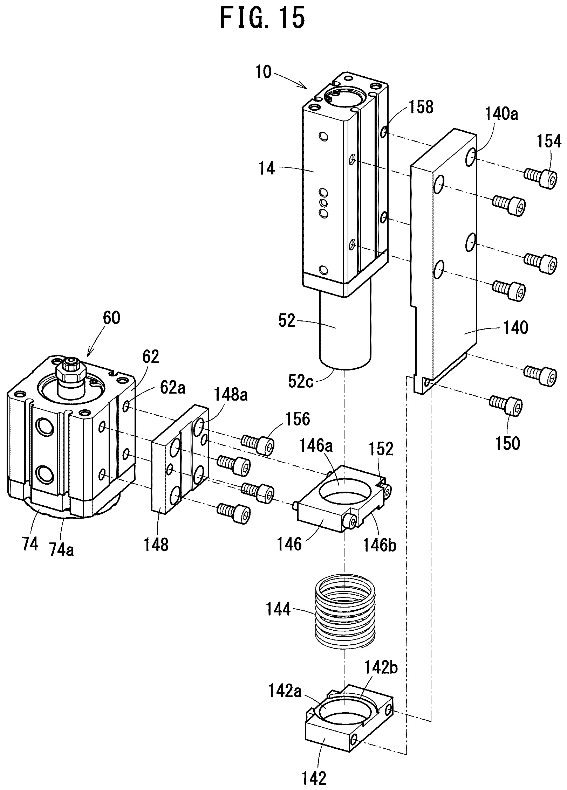

A description will be given with reference to FIG. 14 and FIG. 15 concerning a third mounting configuration by which the excessive attraction detection device 10 is mounted on the magnetic gripper 60. The excessive attraction detection device 10 is mounted on the magnetic gripper 60 via a first vertical plate 140, a first horizontal plate 142, a spring 144, a second horizontal plate 146, and a second vertical plate 148.

The first vertical plate 140 and the first horizontal plate 142 are mutually connected by fifth bolts 150, and thereby constitute an L-shaped plate. The second vertical plate 148 and the second horizontal plate 146 are mutually connected by sixth bolts 152, and thereby constitute an L-shaped plate.

Seventh bolts 154 are inserted into round holes 140a of the first vertical plate 140, and by being screwed into mounting holes 158 of the cylinder tube 14, fixes the first vertical plate 140 to the excessive attraction detection device 10. Eighth bolts 156 are inserted into round holes 148a of the second vertical plate 148, and by being screwed into the mounting holes 62a of the cylinder body 62, fixes the second vertical plate 148 to the magnetic gripper 60.

The first horizontal plate 142 includes a mounting hole 142a into which the housing 52 of the excessive attraction detection device 10 is press-fitted, and a spring receiving member 142b that is formed on an upper part of the mounting hole 142a. The second horizontal plate 146 includes a guide hole 146a through which the housing 52 is inserted, and a spring receiving member 146b that is formed on a lower part of the guide hole 146a.

The spring 144 is disposed between the first horizontal plate 142 and the second horizontal plate 146. A lower end of the spring 144 abuts against the spring receiving member 142b of the first horizontal plate 142, and an upper end of the spring 144 abuts against the spring receiving member 146b of the second horizontal plate 146.

The housing 52 of the excessive attraction detection device 10 passes through the guide hole 146a of the second horizontal plate 146, and in a state of projecting out downwardly from the first horizontal plate 142, is press-fitted and fixed to the mounting hole 142a of the first horizontal plate 142. Without the spring 144 abutting against the workpiece, a load is not applied to the spring 144, and the lower end 52c of the housing 52 is positioned more downwardly than the lower end 74a of the bottom cover 74 of the magnetic gripper 60.

When the workpiece is attracted and retained by the magnetic gripper 60, the workpiece presses up the housing 52 of the excessive attraction detection device 10. The first horizontal plate 142 which is integral with the housing 52 is also pressed upwardly, and the spring 144 is compressed. The housing 52 is pressed up to a position that meets with the surface shape of the workpiece. More specifically, the positional relationship between the lower end 52c of the housing 52 and the lower end 74a of the bottom cover 74 is automatically adjusted within a range of the amount by which the spring 144 is compressed.

### (Fourth Embodiment)

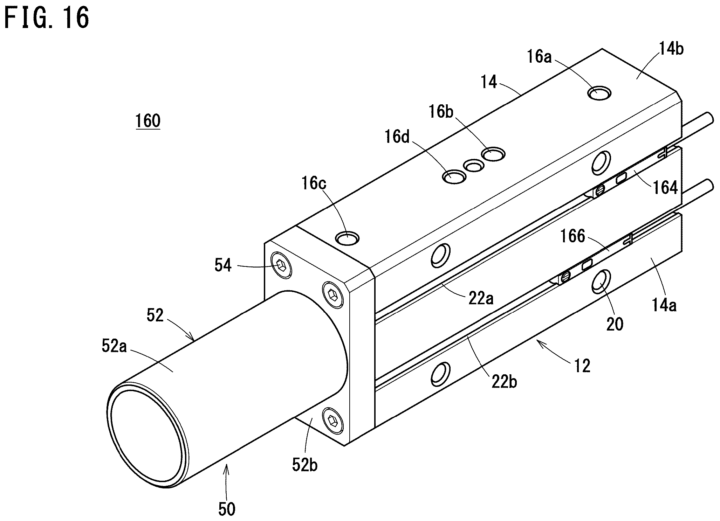

Next, a description will be given with reference to FIG. 16 to FIG. 19 concerning an excessive attraction detection device 160 according to a fourth embodiment of the present invention. In the excessive attraction detection device 160 according to the fourth embodiment, constituent elements that are the same as or equivalent to those in the excessive attraction detection device 10 according to the first embodiment are designated by the same reference numerals.

The excessive attraction detection device 160 differs from the excessive attraction detection device 10 in that it is equipped with a return spring 162 that is disposed in the cylinder member 12, and further, in that it includes two sensors, namely, a first sensor 164 and a second sensor 166. The excessive attraction detection device 160 is suitable for distinguishing and determining a state in which no workpiece W is being attracted and retained, a state in which only one workpiece W is being attracted and retained, and a state in which two or more workpieces W are being attracted and retained.

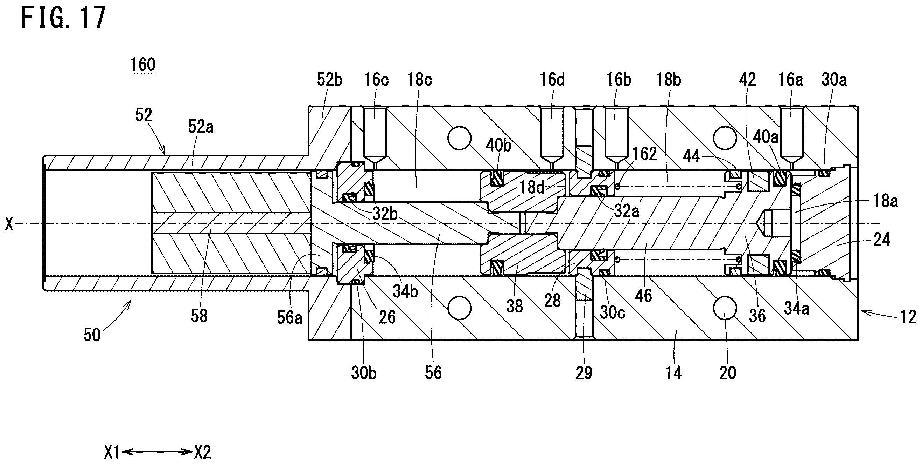

As shown in FIG. 17, the return spring 162 is disposed in the second air chamber 18b between the first piston 36 and the intermediate plate 28. The first piston 36 is biased in the X2 direction by the biasing force of the return spring 162. According to the present embodiment, although the return spring 162 is disposed between the first piston 36 and the intermediate plate 28, a return spring may also be disposed between the second piston 38 and the second end cover 26.

As shown in FIG. 16, the first sensor 164 is disposed in a first mounting groove 22a of the cylinder tube 14, and the second sensor 166 is disposed in a second mounting groove 22b of the cylinder tube 14. The first sensor 164 and the second sensor 166 detect a magnetic flux of the permanent magnet used for detection 42 that is mounted on the first piston 36.

The permanent magnet used for attraction 58 is displaced, integrally together with the first piston 36, the piston rod 46, the second piston 38, and the drive rod 56, in the X1 direction or the X2 direction. Hereinafter, these members, which are displaced integrally together as one unit, will be referred to as a "movable part". The displacement of the movable part in the X1 direction is restricted by the second piston 38 abutting against the second end cover 26. The displacement of the movable part in the X2 direction is restricted by the first piston 36 abutting against the first end cover 24.

When the movable part is displaced maximally in the X1 direction and the permanent magnet used for attraction 58 is at the "attracted position", the movable part receives the maximum biasing force DF in the X2 direction by the return spring 162. When the permanent magnet used for attraction 58 is in the "attracted position", the second sensor 166 is operated. When the movable part is displaced maximally in the X2 direction and the permanent magnet used for attraction 58 is in the "retracted position", the first sensor 164 is operated.

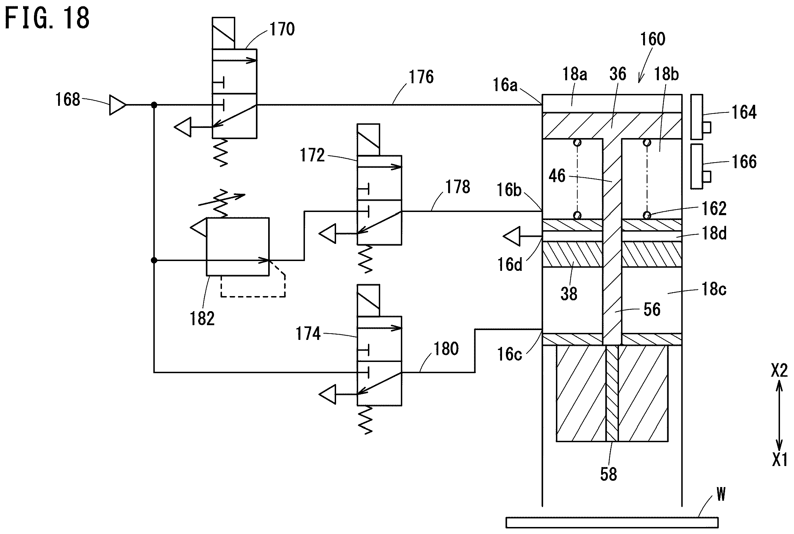

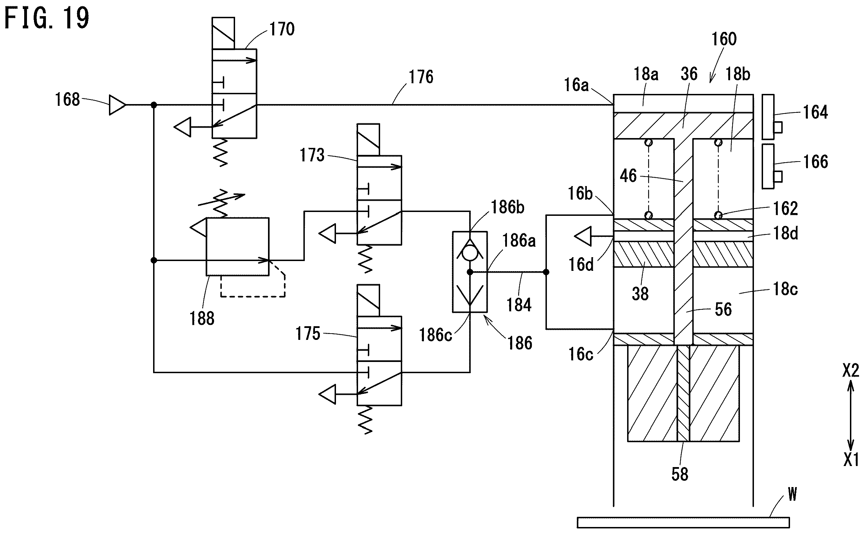

Next, with reference to FIG. 18 and FIG. 19, a description will be given concerning a fluid circuit that is connected to the excessive attraction detection device 160, and further, a method for determining the attracted state of the workpiece W using the fluid circuit. FIG. 18 is a view for describing a fluid circuit of the first type, and FIG. 19 is a view for describing a fluid circuit of the second type. For the sake of convenience, in FIG. 18 and FIG. 19, the excessive attraction detection device 160 is illustrated in a schematic manner, and the workpiece W is shown when only one workpiece W is attracted and retained by the workpiece attraction device. In the fluid circuit of FIG. 19, constituent elements that are the same as or equivalent to those in the fluid circuit of FIG. 18 are designated by the same reference numerals.

### (First Type)

The first port 16a of the excessive attraction detection device 160 is connected via a first flow path 176 to a first solenoid valve 170. The first solenoid valve 170 is configured as a two-position three-port valve, and is switched between a state in which the first port 16a is connected to an air supply source 168, and a state in which the first port 16a is opened to the atmosphere. When the first solenoid valve 170 is turned ON, the air at a pressure PS is supplied from the air supply source 168 to the first air chamber 18a. When the first solenoid valve 170 is turned OFF, the air in the first air chamber 18a is discharged.

The second port 16b of the excessive attraction detection device 160 is connected via a second flow path 178 to a second solenoid valve 172. The second solenoid valve 172 is connected to a pressure reducing valve 182. The second solenoid valve 172 is configured as a two-position three-port valve, and is switched between a state in which the second port 16b is connected via the pressure reducing valve 182 to the air supply source 168, and a state in which the second port 16b is opened to the atmosphere. When the second solenoid valve 172 is turned ON, the air from the air supply source 168 is reduced in pressure to PR1 by the pressure reducing valve 182, and thereafter is supplied to the second air chamber 18b. When the second solenoid valve 172 is turned OFF, the air in the second air chamber 18b is discharged.

The third port 16c of the excessive attraction detection device 160 is connected via a third flow path 180 to a third solenoid valve 174. The third solenoid valve 174 is configured as a two-position three-port valve, and is switched between a state in which the third port 16c is connected to the air supply source 168, and a state in which the third port 16c is opened to the atmosphere. When the third solenoid valve 174 is turned ON, the air at the pressure PS is supplied from the air supply source 168 to the third air chamber 18c. When the third solenoid valve 174 is turned OFF, the air in the third air chamber 18c is discharged. The fourth air chamber 18d of the excessive attraction detection device 160 is always connected to the atmosphere through the fourth port 16d.

Assuming that the aforementioned fluid circuit is used, a description will be given concerning a method for determining the attracted state of the workpiece W by the workpiece attraction device such as the magnetic gripper 60 or the like. More specifically, a description will be given concerning a method of determining a state in which no workpiece W is being attracted and retained, a state in which only one workpiece W is being attracted and retained, and a state in which two or more workpieces W are being attracted and retained.

In an initial state, in order to attract the workpiece W, the air is supplied and accumulated in the first pressure chamber 64a of the magnetic gripper 60, and the piston assembly 68 is positioned at the end of displacement on the side of the bottom cover 74. As shown in FIG. 18, the first solenoid valve 170, the second solenoid valve 172, and the third solenoid valve 174 are all turned OFF, and the air is discharged from the first air chamber 18a, the second air chamber 18b, and the third air chamber 18c of the excessive attraction detection device 160. The permanent magnet used for attraction 58 of the excessive attraction detection device 160 that is mounted on the magnetic gripper 60, due to the fact that the movable part receives the biasing force of the return spring 162, is in the retracted position.

From the aforementioned initial state, the first solenoid valve 170 is switched ON, and the air at the pressure PS is supplied to the first air chamber 18a of the excessive attraction detection device 160. The movable part is displaced in the X1 direction against the biasing force of the return spring 162, and the permanent magnet used for attraction 58 reaches the attracted position. In accordance with this feature, the second sensor 166 is operated. When the cross-sectional area of the first piston 36 is S, the biasing force of the air (PS × S) is sufficiently larger than the maximum biasing force DF of the return spring 162.

In the case that the permanent magnet used for attraction 58 is in the attracted position and the workpiece W is attracted and retained by the magnetic gripper 60, the majority of the magnetic flux leaving from the permanent magnet used for attraction 58 and returning to the permanent magnet used for attraction 58 passes through the workpiece W, and a mutually attractive magnetic force acts between the permanent magnet used for attraction 58 and the workpiece W. The magnitude of this magnetic force differs depending on the number of the workpieces W that are attracted and retained by the magnetic gripper 60. In the case that the number of the workpieces W that are attracted and retained is one, the force with which the permanent magnet used for attraction 58 is attracted to the workpiece W is defined as MF1, and in the case that the number of the workpieces W that are attracted and retained is two, the force with which the permanent magnet used for attraction 58 is attracted to the workpiece W is defined as MF2. The maximum biasing force DF by the return spring 162 is set so that DF < MF1.

Next, the first solenoid valve 170 is switched OFF, and the air in the first air chamber 18a is discharged. In the case that the workpiece W is not attracted and retained by the magnetic gripper 60, the movable part is displaced in the X2 direction by the biasing force of the return spring 162, and the permanent magnet used for attraction 58 returns to the retracted position. In accordance with this feature, the first sensor 164 is operated. In the case that the workpiece W is attracted and retained by the magnetic gripper 60, the movable part is not displaced, and the permanent magnet used for attraction 58 remains at the attracted position. Stated otherwise, the second sensor 166 continues to be activated. In the case that the first sensor 164 is operated when the first solenoid valve 170 is switched OFF, it is determined that the workpiece W is not being attracted and retained by the magnetic gripper 60, and the process of determining the attracted state of the workpiece W is completed.

In the case that the first sensor 164 is not operated even if the first solenoid valve 170 is switched OFF, the second solenoid valve 172 is switched ON, and the air at the pressure PR1 is supplied to the second air chamber 18b. By the air at the pressure PR1 being supplied to the second air chamber 18b, a thrust force F3 acts on the first piston 36 in the X2 direction. If the cross-sectional area of the first piston 36 is S and the cross-sectional area of the piston rod 46 is S1, then F3 = PR1 × (S - S1).

When the air at the pressure PR1 is supplied to the second air chamber 18b, the force in the X2 direction that acts on the movable part including the permanent magnet used for attraction 58 that is in the attracted position is (F3 + DF). The force in the X1 direction that acts on the movable part including the permanent magnet used for attraction 58 at the attracted position, in the case that only one workpiece W is being attracted and retained, is MF1, and in the case that two workpieces W are being attracted and retained, is MF2. The pressure PR1 or the like of the air that is supplied to the second air chamber 18b is set in a manner so that the inequality MF1 < (F3 + DF) < MF2 is satisfied. The term (F3 + DF) corresponds to the "attracted position release biasing force" of the present invention.

In the case that only one workpiece W is being attracted and retained by the magnetic gripper 60, if the air at the pressure PR1 is supplied to the second air chamber 18b, since MF1 < (F3 + DF), the movable part is displaced in the X2 direction, and the permanent magnet used for attraction 58 returns to the retracted position. In accordance with this feature, the first sensor 164 is operated. On the other hand, in the case that two or more workpieces W are being attracted and retained by the magnetic gripper 60, even if the air at the pressure PR1 is supplied to the second air chamber 18b, since (F3 + DF) < MF2, the movable part is not displaced, and the permanent magnet used for attraction 58 remains at the attracted position. Stated otherwise, the second sensor 166 continues to be activated.

In the case that the first sensor 164 is operated when the second solenoid valve 172 is switched ON, it is determined that only one workpiece W is being attracted and retained by the magnetic gripper 60, and the process of determining the attracted state of the workpiece W is completed. In the case that the first sensor 164 is not operated even when the second solenoid valve 172 is switched ON, it is determined that two or more workpieces W are being attracted and retained by the magnetic gripper 60. In this case, in order to return the permanent magnet used for attraction 58 to the retracted position, the following post-processing is carried out.

While the second solenoid valve 172 is maintained ON, the third solenoid valve 174 is switched ON. In accordance with this feature, the air at the pressure PR1 is supplied to the second air chamber 18b, and the air at the pressure PS is supplied to the third air chamber 18c. By the air at the pressure PR1 being supplied to the second air chamber 18b, the aforementioned thrust force F3 acts on the first piston 36. By the air at the pressure PS being supplied to the third air chamber 18c, a thrust force F4 acts on the second piston 38 in the X2 direction. If the cross-sectional area of the drive rod 56 is S2, then from the fact that the cross-sectional area of the second piston 38 is the same as the cross-sectional area of the first piston 36, F4 = PS × (S - S2).

When the air is supplied to the second air chamber 18b and the third air chamber 18c, the force in the X2 direction that acts on the movable part including the permanent magnet used for attraction 58 that is in the attracted position is (F3 + F4 + DF). Since (F3 + F4 + DF) is sufficiently larger than MF2, when the air is supplied to the second air chamber 18b and the third air chamber 18c, the movable part is displaced in the X2 direction, and the permanent magnet used for attraction 58 returns to the retracted position.

### (Second Type)

The first port 16a of the excessive attraction detection device 160 is connected via a first flow path 176 to the first solenoid valve 170. The first solenoid valve 170 is configured as a two-position three-port valve, and is switched between a state in which the first port 16a is connected to the air supply source 168, and a state in which the first port 16a is opened to the atmosphere. When the first solenoid valve 170 is turned ON, the air at the pressure PS is supplied from the air supply source 168 to the first air chamber 18a, and when the first solenoid valve 170 is turned OFF, the air in the first air chamber 18a is discharged.

The second port 16b and the third port 16c of the excessive attraction detection device 160 are connected via a shared flow path 184 to a discharge port 186a of a shuttle valve 186. A first supply port 186b of the shuttle valve 186 is connected to a second solenoid valve 173. The second solenoid valve 173 is configured as a two-position three-port valve, and is switched between a state in which the first supply port 186b of the shuttle valve 186 is connected via a pressure reducing valve 188 to the air supply source 168, and a state in which the first supply port 186b of the shuttle valve 186 is opened to the atmosphere. A second supply port 186c of the shuttle valve 186 is connected to a third solenoid valve 175. The third solenoid valve 175 is configured as a two-position three-port valve, and is switched between a state in which the second supply port 186c of the shuttle valve 186 is connected to the air supply source 168, and a state in which the second supply port 186c of the shuttle valve 186 is opened to the atmosphere.

When the second solenoid valve 173 is turned ON, the air from the air supply source 168 is reduced in pressure to PR2 by the pressure reducing valve 188, and thereafter is supplied to the second air chamber 18b and the third air chamber 18c. When the third solenoid valve 175 is turned ON, the air at the pressure PS is supplied from the air supply source 168 to the second air chamber 18b and the third air chamber 18c. When the second solenoid valve 173 and the third solenoid valve 175 are turned OFF, the air in the second air chamber 18b and the third air chamber 18c is discharged. The fourth air chamber 18d of the excessive attraction detection device 160 is always connected to the atmosphere through the fourth port 16d.

Assuming that the aforementioned fluid circuit is used, a description will be given concerning a method for determining the attracted state of the workpiece W by the workpiece attraction device such as the magnetic gripper 60 or the like. More specifically, a description will be given concerning a method of determining a state in which no workpiece W is being attracted and retained, a state in which only one workpiece W is being attracted and retained, and a state in which two or more workpieces W are being attracted and retained.

In an initial state, in order to attract the workpiece W, the air is supplied and accumulated in the first pressure chamber 64a of the magnetic gripper 60, and the piston assembly 68 is positioned at the end of displacement on the side of the bottom cover 74. As shown in FIG. 19, the first solenoid valve 170, the second solenoid valve 173, and the third solenoid valve 175 are all turned OFF, and the air is discharged from the first air chamber 18a, the second air chamber 18b, and the third air chamber 18c of the excessive attraction detection device 160. The permanent magnet used for attraction 58 of the excessive attraction detection device 160 that is mounted on the magnetic gripper 60 is in the retracted position.

From the aforementioned initial state, the first solenoid valve 170 is switched ON, and the air at the pressure PS is supplied to the first air chamber 18a of the excessive attraction detection device 160. The movable part is displaced in the X1 direction against the biasing force of the return spring 162, and the permanent magnet used for attraction 58 reaches the attracted position. In accordance with this feature, the second sensor 166 is operated.

When the permanent magnet used for attraction 58 is in the attracted position and the workpiece W is attracted and retained by the magnetic gripper 60, a mutually attractive magnetic force acts between the permanent magnet used for attraction 58 and the workpiece W. The magnitude of this magnetic force differs depending on the number of the workpieces W that are attracted and retained by the magnetic gripper 60. In the case that the number of the workpieces W that are attracted and retained is one, the force with which the permanent magnet used for attraction 58 is attracted to the workpiece W is MF1, and in the case that the number of the workpieces W that are attracted and retained is two, the force with which the permanent magnet used for attraction 58 is attracted to the workpiece W is MF2.

Next, the first solenoid valve 170 is switched OFF, and the air in the first air chamber 18a is discharged. In the case that the workpiece W is not attracted and retained by the magnetic gripper 60, the permanent magnet used for attraction 58 returns to the retracted position. In accordance with this feature, the first sensor 164 is operated. When the workpiece W is attracted and retained by the magnetic gripper 60, the permanent magnet used for attraction 58 remains at the attracted position. Stated otherwise, the second sensor 166 continues to be activated. In the case that the first sensor 164 is operated when the first solenoid valve 170 is switched OFF, it is determined that the workpiece W is not being attracted and retained by the magnetic gripper 60, and the process of determining the attracted state of the workpiece is completed.

In the case that the first sensor 164 is not operated even if the first solenoid valve 170 is switched OFF, the second solenoid valve 173 is switched ON, and the air at the pressure PR2 is supplied to the second air chamber 18b and the third air chamber 18c. By the air at the pressure PR2 being supplied to the second air chamber 18b, a thrust force F5 acts on the first piston 36 in the X2 direction. If the cross-sectional area of the first piston 36 is S and the cross-sectional area of the piston rod 46 is S1, then F5 = PR2 × (S - S1). By the air at the pressure PR2 being supplied to the third air chamber 18c, a thrust force F6 acts on the second piston 38 in the X2 direction. If the cross-sectional area of the drive rod 56 is S2, then from the fact that the cross-sectional area of the second piston 38 is the same as the cross-sectional area of the first piston 36, F6 = PR2 × (S - S2).

When the air at the pressure PR2 is supplied to the second air chamber 18b and the third air chamber 18c, the force in the X2 direction that acts on the movable part including the permanent magnet used for attraction 58 that is in the attracted position is (F5 + F6 + DF). The force in the X1 direction that acts on the movable part including the permanent magnet used for attraction 58 at the attracted position, in the case that only one workpiece W is being attracted and retained, is MF1, and in the case that two workpieces W are being attracted and retained, is MF2. The pressure PR2 or the like of the air that is supplied to the second air chamber 18b and the third air chamber 18c is set in a manner so that the inequality MF1 < (F5 + F6 + DF) < MF2 is satisfied. The term (F5 + F6 + DF) corresponds to the "attracted position release biasing force" of the present invention.

In the case that only one workpiece W is being attracted and retained by the magnetic gripper 60, if the air at the pressure PR2 is supplied to the second air chamber 18b and the third air chamber 18c, since MF1 < (F5 + F6 + DF), the permanent magnet used for attraction 58 returns to the retracted position. In accordance with this feature, the first sensor 164 is operated. On the other hand, in the case that two or more workpieces W are being attracted and retained by the magnetic gripper 60, even if the air at the pressure PR2 is supplied to the second air chamber 18b and the third air chamber 18c, since (F5 + F6 + DF) < MF2, the permanent magnet used for attraction 58 remains at the attracted position. Stated otherwise, the second sensor 166 continues to be activated.

In the case that the first sensor 164 is operated when the second solenoid valve 173 is switched ON, it is determined that only one workpiece W is being attracted and retained by the magnetic gripper 60, and the process of determining the attracted state of the workpiece W is completed. In the case that the first sensor 164 is not operated even when the second solenoid valve 173 is switched ON, it is determined that two or more workpieces W are being attracted by the magnetic gripper 60. In this case, in order to return the permanent magnet used for attraction 58 to the retracted position, the following post-processing is carried out.

Together with the second solenoid valve 173 being switched OFF, the third solenoid valve 175 is switched ON. In accordance with this feature, the air at the pressure PS is supplied to the second air chamber 18b and the third air chamber 18c. By the air at the pressure PS being supplied to the second air chamber 18b, a thrust force F7 acts on the first piston 36 in the X2 direction. If the cross-sectional area of the first piston 36 is S and the cross-sectional area of the piston rod 46 is S1, then F7 = PS × (S - S1). By the air at the pressure PS being supplied to the third air chamber 18c, a thrust force F8 acts on the second piston 38 in the X2 direction. If the cross-sectional area of the drive rod 56 is S2, then from the fact that the cross-sectional area of the second piston 38 is the same as the cross-sectional area of the first piston 36, F8 = PS × (S - S2).

When the air at the pressure PS is supplied to the second air chamber 18b and the third air chamber 18c, the force in the X2 direction that acts on the movable part including the permanent magnet used for attraction 58 that is in the attracted position is (F7 + F8 + DF). Since (F7 + F8 + DF) is sufficiently larger than MF2, when the air at the pressure PS is supplied to the second air chamber 18b and the third air chamber 18c, the movable part is displaced in the X2 direction, and the permanent magnet used for attraction 58 returns to the retracted position.

In accordance with the excessive attraction detection device 160 according to the present embodiment, not only can it be easily determined that only one workpiece W is being attracted and retained, and that two or more workpieces W are being attracted and retained, but it can also be easily determined that no workpiece W is being attracted and retained.

### (Fifth Embodiment)

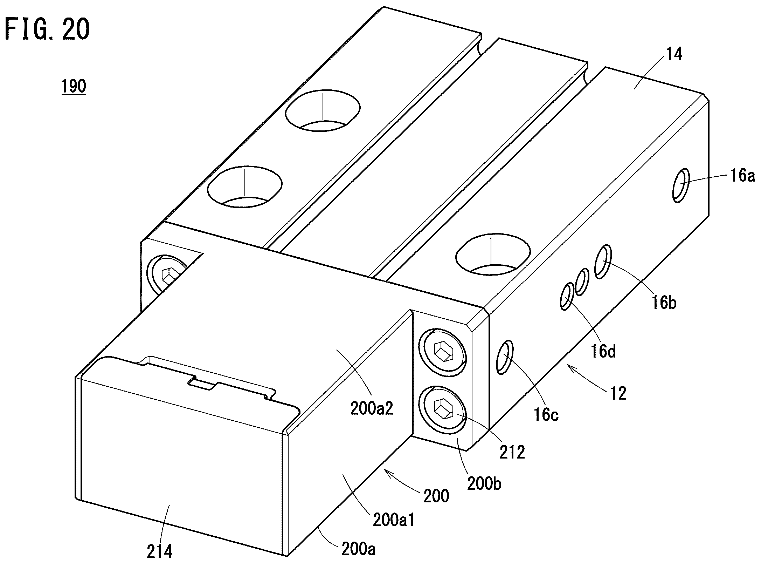

Next, a description will be given with reference to FIG. 20 to FIG. 23 concerning an excessive attraction detection device 190 according to a fifth embodiment of the present invention. In the excessive attraction detection device 190 according to the fifth embodiment, constituent elements that are the same as or equivalent to those in the excessive attraction detection device 10 according to the first embodiment are designated by the same reference numerals, and detailed description of such features may be omitted.

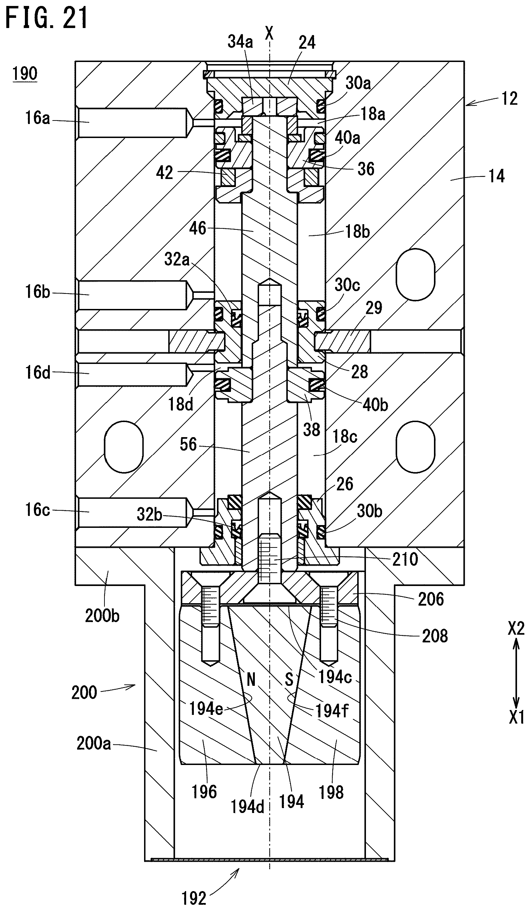

As shown in FIG. 21, the excessive attraction detection device 190 is constituted from the cylinder member 12 that is operated by air, and a magnetic part 192 that is driven by the cylinder member 12. The cylinder member 12 includes the cylinder tube 14, the first end cover 24, the second end cover 26, the intermediate plate 28, the first piston 36, the second piston 38, and the piston rod 46. The first air chamber 18a is formed between the first piston 36 and the first end cover 24, and the second air chamber 18b is formed between the first piston 36 and the intermediate plate 28. The third air chamber 18c is formed between the second piston 38 and the second end cover 26, and the fourth air chamber 18d is formed between the second piston 38 and the intermediate plate 28.

As shown in FIG. 21 to FIG. 23, the magnetic part 192 includes the drive rod 56, a permanent magnet used for attraction 194, a first movable yoke 196, a second movable yoke 198, a housing 200, a first fixed yoke 202, and a second fixed yoke 204. The first movable yoke 196, the second movable yoke 198, the first fixed yoke 202, and the second fixed yoke 204 are made from a ferromagnetic material. The drive rod 56 that is connected to the second piston 38 is inserted through the second end cover 26, and extends into the housing 200.

The permanent magnet used for attraction 194 is of a hexahedral shape, and includes a first surface 194a, a second surface 194b, a third surface 194c, a fourth surface 194d, a fifth surface 194e, and a sixth surface 194f. The first surface 194a and the second surface 194b are trapezoidal shaped surfaces of the same shape and which are parallel to each other. The third surface 194c is a rectangular shaped surface having two sides, i.e., a lower base of the first surface 194a and a lower base of the second surface 194b, and is perpendicular to the first surface 194a. The fourth surface 194d is a rectangular shaped surface having two sides, i.e., an upper base of the first surface 194a and an upper base of the second surface 194b, and is perpendicular to the first surface 194a. The fifth surface 194e is a rectangular shaped surface having two sides, i.e., one of the oblique sides of the first surface 194a and one of the oblique sides of the second surface 194b, and is perpendicular to the first surface 194a. The sixth surface 194f is a rectangular shaped surface having two sides, i.e., another of the oblique sides of the first surface 194a and another of the oblique sides of the second surface 194b, and is perpendicular to the first surface 194a.

The permanent magnet used for attraction 194 is magnetized in a direction parallel to the lower base or the upper base of the first surface 194a. According to the present embodiment, the fifth surface 194e is the north pole, and the sixth surface 194f is the south pole. The term "width" of the permanent magnet used for attraction 194 refers to the length along a direction that is parallel to the lower base or the upper base of the first surface 194a. In other words, it can be stated that the permanent magnet used for attraction 194 is magnetized in the widthwise direction.

The first movable yoke 196 is coupled to the fifth surface 194e of the permanent magnet used for attraction 194, and the second movable yoke 198 is coupled to the sixth surface 194f of the permanent magnet used for attraction 194. More specifically, the permanent magnet used for attraction 194 is sandwiched between the first movable yoke 196 and the second movable yoke 198. The permanent magnet used for attraction 194, the first movable yoke 196, and the second movable yoke 198 are integrally connected to one another, and are configured as a whole in a columnar shape having a uniform elliptical cross section.

The permanent magnet used for attraction 194, the first movable yoke 196, and the second movable yoke 198 are mounted on an end part of the drive rod 56 via an elliptically shaped retaining plate 206. Specifically, the first movable yoke 196 and the second movable yoke 198 are fixed to the retaining plate 206 by first screw members 208, and the retaining plate 206 is fixed to the drive rod 56 by a second screw member 210.

The first piston 36, the piston rod 46, the second piston 38, and the drive rod 56 have a common axial line X. The permanent magnet used for attraction 194, the first movable yoke 196, and the second movable yoke 198 are displaced, integrally together with the first piston 36, the piston rod 46, the second piston 38, and the drive rod 56, in the X1 direction or the X2 direction that are parallel to the axial line X. Hereinafter, these members, which are displaced integrally together as one unit, will be referred to as a "movable part". The third surface 194c and the fourth surface 194d of the permanent magnet used for attraction 194 are perpendicular to the axial line X, and the fourth surface 194d of the permanent magnet used for attraction 194 is positioned at a distal end in the X1 direction of the movable part.

The housing 200 has a main body portion 200a of a tubular shape having a rectangular cross section, and a pair of flange members 200b that extend outwardly from one end of the main body portion 200a. As shown in FIG. 20, the main body portion 200a has a pair of narrow side walls 200a1, and a pair of wide side walls 200a2. A bottom wall 214 that closes the other end of the main body portion 200a is mounted on the housing 200. The housing 200 and the bottom wall 214 are made from a non-magnetic material. The housing 200 is mounted on an end part of the cylinder tube 14, by screwing mounting bolts 212 that are inserted through the flange members 200b into the cylinder tube 14.

The plate shaped first fixed yoke 202 is mounted on an inner side of the housing 200 at one of the pair of wide side walls 200a2. The plate shaped second fixed yoke 204 is mounted on an inner side of the housing 200 at another one of the pair of wide side walls 200a2. The first fixed yoke 202 faces in parallel toward the first surface 194a of the permanent magnet used for attraction 194, and the second fixed yoke 204 faces in parallel toward the second surface 194b of the permanent magnet used for attraction 194. The second fixed yoke 204 has the same structure as the first fixed yoke 202, and in the case there is no need to distinguish between both members, they will be referred to as "fixed yokes".

The fixed yokes 202 and 204 have rectangular shaped first portions 202a and 204a, and trapezoidal shaped second portions 202b and 204b that extend in the X1 direction from the first portions 202a and 204a. The second portions 202b and 204b of the fixed yokes 202, 204 are gradually increased in width from an end part in the X1 direction to an end part in the X2 direction. The first portions 202a and 204a of the fixed yokes 202 and 204 have a uniform width that is greater than the maximum width of the second portions 202b and 204b.

When the air is supplied to the first air chamber 18a, and the air from the second air chamber 18b and the third air chamber 18c is discharged, the movable part is displaced in the X1 direction. The displacement of the movable part in the X1 direction is restricted by the second piston 38 abutting against the second end cover 26. When the movable part is displaced maximally in the X1 direction, the permanent magnet used for attraction 194 is in the "attracted position". When the air is supplied to the second air chamber 18b and the third air chamber 18c, and the air in the first air chamber 18a is discharged to the exterior, the movable part is displaced in the X2 direction. The displacement of the movable part in the X2 direction is restricted by the first piston 36 abutting against the first end cover 24. When the movable part is displaced maximally in the X2 direction, the permanent magnet used for attraction 194 is in the "retracted position".

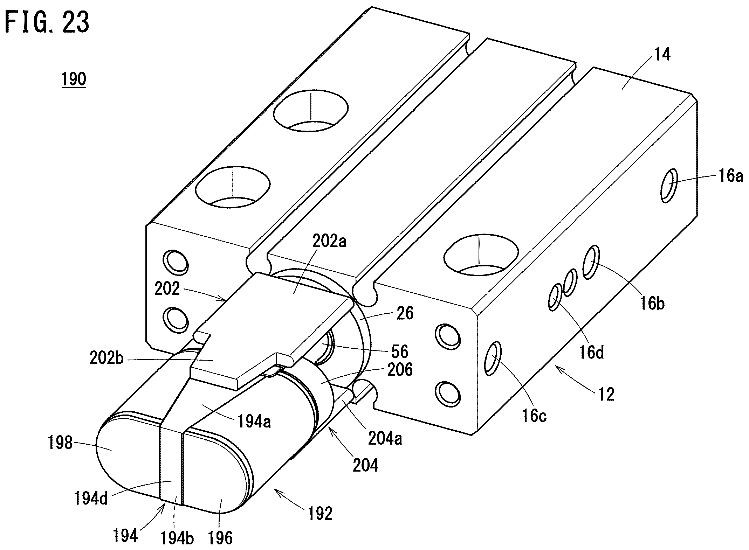

In the case that the permanent magnet used for attraction 194 is in the attracted position, the second portion 202b of the first fixed yoke 202 faces toward an area including the lower base of the first surface 194a of the permanent magnet used for attraction 194 (refer to FIG. 23). Similarly, the second portion 204b of the second fixed yoke 204 faces toward an area including the lower base of the second surface 194b of the permanent magnet used for attraction 194. In this case, at the locations where the fixed yokes 202 and 204 face toward the permanent magnet used for attraction 194, the width of the fixed yokes 202 and 204 is smaller than the width of the permanent magnet used for attraction 194.

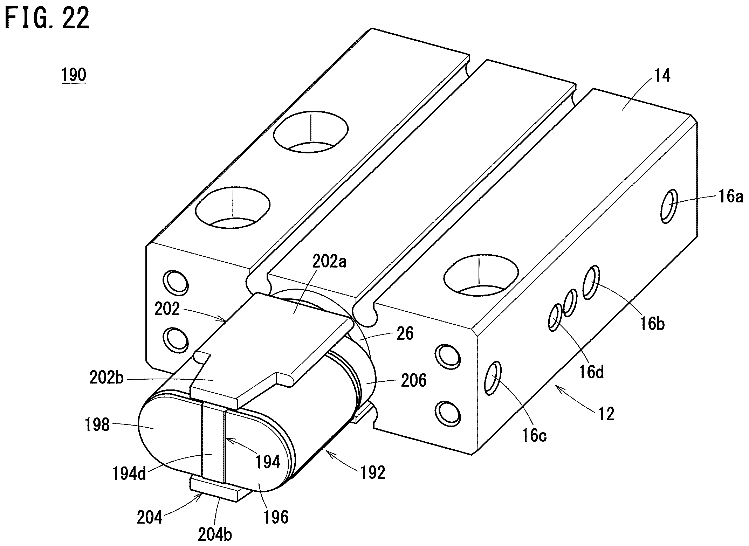

In the case that the permanent magnet used for attraction 194 is in the retracted position, the first portion 202a and the second portion 202b of the first fixed yoke 202 face toward the first surface 194a of the permanent magnet used for attraction 194 (refer to FIG. 22). Similarly, the first portion 204a and the second portion 204b of the second fixed yoke 204 face toward the second surface 194b of the permanent magnet used for attraction 194. In this case, at the locations where the fixed yokes 202 and 204 face toward the permanent magnet used for attraction 194, the width of the fixed yokes 202 and 204 is larger than the width of the permanent magnet used for attraction 194.

In the case that the workpiece W is attracted and retained by the workpiece attraction device such as the magnetic gripper 60 or the like, if the permanent magnet used for attraction 194 is in the attracted position, the mutually attractive force between the permanent magnet used for attraction 194 and the workpiece W becomes sufficiently large. This is because the width of the fixed yokes 202 and 204 is smaller than the width of the permanent magnet used for attraction 194 at the locations where the fixed yokes 202 and 204 face toward the permanent magnet used for attraction 194, and the magnetic flux of the permanent magnet used for attraction 194 that passes through the fixed yokes 202 and 204 is reduced. The majority of the magnetic flux emerging from the fifth surface 194e of the permanent magnet used for attraction 194, after having passed through the first movable yoke 196, passes through the workpiece W, and further through the second movable yoke 198, and enters into the sixth surface 194f of the permanent magnet used for attraction 194.

In the case that the workpiece W is attracted and retained by the workpiece attraction device such as the magnetic gripper 60 or the like, if the permanent magnet used for attraction 194 is in the retracted position, the workpiece retaining force by the permanent magnet used for attraction 194 is prevented from remaining. This is because the width of the fixed yokes 202 and 204 is larger than the width of the permanent magnet used for attraction 194 at the locations where the fixed yokes 202 and 204 face toward the permanent magnet used for attraction 194, and the magnetic flux of the permanent magnet used for attraction 194 that passes through the fixed yokes 202 and 204 increases. The majority of the magnetic flux emerging from the fifth surface 194e of the permanent magnet used for attraction 194, after having passed through the first movable yoke 196, passes through the first fixed yoke 202 or the second fixed yoke 204, and further through the second movable yoke 198, and enters into the sixth surface 194f of the permanent magnet used for attraction 194.

According to the excessive attraction detection device 190 of the present embodiment, in the case that the permanent magnet used for attraction 194 which is magnetized in the widthwise direction is in the attracted position, at the locations where the fixed yokes 202 and 204 face toward the permanent magnet used for attraction 194, the width of the fixed yokes 202 and 204 is smaller than the width of the permanent magnet used for attraction 194. Therefore, the mutually attractive force between the permanent magnet used for attraction 194 at the attracted position and the workpiece W can be ensured to be sufficiently large. Further, in the case that the permanent magnet used for attraction 194 which is magnetized in the widthwise direction is in the retracted position, at the locations where the fixed yokes 202 and 204 face toward the permanent magnet used for attraction 194, the width of the fixed yokes 202 and 204 is larger than the width of the permanent magnet used for attraction 194. Therefore, the residual retaining force that acts on the workpiece can be made as small as possible.

The excessive attraction detection device 190 according to the present embodiment, in terms of the structure of a magnetic part 192, differs from the excessive attraction detection device 10 according to the first embodiment. This structure of the magnetic part 192 can also be applied to the second to fourth embodiments. In addition, concerning the manner in which the excessive attraction detection device 190 is mounted on the workpiece attraction device, the various examples described above concerning the manner in which the excessive attraction detection device 10 is mounted on the magnetic gripper 60 can be applied thereto.

The present invention is not limited to the above-described disclosure, and various configurations can be adopted therein without departing from the essence and gist of the present invention.

## Claims

1. An excessive attraction detection device (10, 80, 90, 160, 190) capable of detecting that an excessive amount of workpieces is attracted and retained by a workpiece attraction device,
wherein the excessive attraction detection device comprises a cylinder member (12) including a piston (36, 38, 82, 92), and a magnetic part (50, 192) including a permanent magnet used for attraction (58, 194), the permanent magnet used for attraction is displaceable integrally with the piston between an attracted position and a retracted position, and a sensor (48, 164, 166) is provided to detect a position of the permanent magnet used for attraction; and
an attracted position release biasing force, which acts on the piston in order to bias the permanent magnet used for attraction from the attracted position toward the retracted position, is set to a value that is larger than a mutually attractive magnetic force of one of the workpieces and the permanent magnet used for attraction at the attracted position in a case that the one of the workpieces is attracted and retained by the workpiece attraction device, and that is smaller than a mutually attractive magnetic force of the workpieces and the permanent magnet used for attraction at the attracted position in a case that two of the workpieces are attracted and retained by the workpiece attraction device.

2. The excessive attraction detection device according to claim 1, wherein the piston is made up from a first piston (36) and a second piston (38), the first piston and the second piston are integrally connected to each other via a piston rod (46), and the attracted position release biasing force is a sum of a thrust force that acts on the first piston by air supplied to the cylinder member, and a thrust force that acts on the second piston by air supplied to the cylinder member.

3. The excessive attraction detection device according to claim 2, wherein an air pressure that acts on the second piston is different from an air pressure that acts on the first piston.

4. The excessive attraction detection device according to claim 1, wherein the piston is made up from a single piston (82), and the attracted position release biasing force is a thrust force that acts on the piston by air supplied to the cylinder member.

5. The excessive attraction detection device according to claim 1, wherein the piston is made up from a single piston (92), and the attracted position release biasing force is a biasing force of a return spring (98) disposed in the cylinder member.

6. The excessive attraction detection device according to claim 1, wherein the sensor operates in response to a magnetic flux of a permanent magnet used for detection (42) that is mounted on the piston.

7. The excessive attraction detection device according to claim 1, wherein the magnetic part comprises a housing (52, 200) configured to accommodate the permanent magnet used for attraction, and an end part of the housing is aligned with a workpiece attraction surface of the workpiece attraction device.

8. The excessive attraction detection device according to claim 1, wherein the magnetic part comprises a housing (52, 200) configured to accommodate the permanent magnet used for attraction, and a positional relationship between an end part of the housing and a workpiece attraction surface of the workpiece attraction device is adjustable.

9. The excessive attraction detection device according to claim 8, wherein the excessive attraction detection device is mounted on the workpiece attraction device via two plates (102, 104) including elongated holes (102c, 104c) therein.

10. The excessive attraction detection device according to claim 8, wherein the excessive attraction detection device is mounted on the workpiece attraction device via two plates (120, 122) that are connected to each other using a first fastener (128), a second fastener (130), and a connecting bolt (132).

11. The excessive attraction detection device according to claim 8, wherein the excessive attraction detection device is mounted on the workpiece attraction device via two L-shaped plates and a spring (144).

12. The excessive attraction detection device according to claim 1, wherein the piston is made up from a first piston (36) and a second piston (38), the first piston and the second piston are integrally connected to each other via a piston rod (46), a return spring (162) is disposed in the cylinder member, and the attracted position release biasing force is a sum of a thrust force that acts on the first piston by air supplied to the cylinder member, and a biasing force of the return spring.

13. The excessive attraction detection device according to claim 1, wherein the piston is made up from a first piston (36) and a second piston (38), the first piston and the second piston are integrally connected to each other via a piston rod (46), a return spring (162) is disposed in the cylinder member, and the attracted position release biasing force is a sum of a thrust force that acts on the first piston by air supplied to the cylinder member, a thrust force that acts on the second piston by air supplied to the cylinder member, and a biasing force of the return spring.

14. The excessive attraction detection device according to claim 12 or 13, wherein the sensor includes a first sensor (164) configured to operate when the permanent magnet used for attraction is in the retracted position, and a second sensor (166) configured to operate when the permanent magnet used for attraction is in the attracted position.

15. The excessive attraction detection device according to claim 1, wherein the magnetic part (192) includes a housing (200) that is fixed to the cylinder member, and a fixed yoke (202, 204) that is mounted on the housing, the permanent magnet used for attraction (194) is magnetized in a widthwise direction, in a case that the permanent magnet used for attraction is in the attracted position, at a location where the fixed yoke faces toward the permanent magnet used for attraction, a width of the fixed yoke is smaller than a width of the permanent magnet used for attraction, and in a case that the permanent magnet used for attraction is in the retracted position, at a location where the fixed yoke faces toward the permanent magnet used for attraction, a width of the fixed yoke is larger than a width of the permanent magnet used for attraction.

16. The excessive attraction detection device according to claim 15, wherein the permanent magnet used for attraction includes a trapezoidal shaped surface, the fixed yoke includes a rectangular shaped first portion (202a, 204a), and a trapezoidal shaped second portion (202b, 204b), and in the case that the permanent magnet used for attraction is in the attracted position, the second portion of the fixed yoke faces toward a portion including a lower bottom of the trapezoidal shaped surface of the permanent magnet used for attraction.
